# EUROPEAN PATENT APPLICATION

(11) **EP 2 017 774 A2**
(43) Date of publication of application: **21.01.2009**
(21) Application number: 08158149.8
(22) Date of filing: 12.06.2008
(51) Int. Cl.: G06N 1/00

(54) **Vehicle behavior learning apparatus and vehicle behavior learning program**

(30) Priority: 29.06.2007 JP 2007172142
(71) Applicant: Aisin AW Co., Ltd., Fujii-cho Anjo-shi, Aichi 444-1192 (JP)
(72) Inventor: Nakao, Koichi c/o Aisin AW Co.,Ltd, Okazaki-shi Aichi 444-8564 (JP); Nakamura, Masaki c/o Aisin AW Co.,Ltd, Okazaki-shi Aichi 444-8564 (JP); Ishikawa, Tomoaki c/o Aisin AW Co.,Ltd, Okazaki-shi Aichi 444-8564 (JP); Kanba, Motoki c/o Aisin AW Co.,Ltd, Okazaki-shi Aichi 444-8564 (JP); Aisaka, Osamu c/o Aisin AW Co.,Ltd, Okazaki-shi Aichi 444-8564 (JP)
(74) Representative: TBK-Patent

(57) **Abstract**

In a vehicle behavior learning apparatus adapted to learn a behavior of a vehicle which occurs at a particular point, relation information is acquired which indicates the relationship between a behavior of vehicle detected by a behavior detection unit and a particular feature recognized by an image recognition unit (**24**) before the detection of the behavior. Detected behavior information is then produced so as to include behavior property information indicating a property of the behavior of the vehicle detected by the behavior detection unit (**24**) and the acquired relation information associated with the behavior, and the resultant detected behavior information is stored in a detected behavior storage unit (**DB4**). Learned behavior information representing a result of learning on the behavior of the vehicle related to the particular feature is produced on the basis of the detected behavior information stored in the detected behavior storage unit (**DB4**).

## Description

### INCORPORATION BY REFERENCE

The disclosure of Japanese Patent Application No. 2007-172142 filed on June 29, 2007, including the specification, drawings and abstract thereof, is incorporated herein by reference in its entirety.

### BACKGROUND OF THE INVENTION

### 1. Field of the Invention

The present invention relates to a vehicle behavior learning apparatus adapted to learn behavior of a vehicle and a vehicle behavior learning program.

### 2. Description of the Related Art

In a case where a particular person drives a vehicle (for example, his/her own car) a plurality of times along the same route, there is a high probability that a particular behavior occurs at a particular point on the route. Specific examples of behaviors are making a turn to left or right, acceleration or deceleration, opening or closing a window, turning a light on or off, changing gear of an automatic transmission, etc., on the way to a particular location such as home, an office, a shop, etc. In recent years, a navigation apparatus configured to provide route guidance or the like has become very popular in many vehicles. There is a need for a navigation apparatus with higher accuracy. There is also a need for a navigation apparatus having extended functions in addition to normal functions such as a capability of providing route guidance. For example, Japanese Unexamined Patent Application Publication No. 2002-286459 discloses a control apparatus adapted to control a blind spot monitor in cooperation with a navigation apparatus installed in a vehicle.

In the control apparatus of the blind spot monitor disclosed in Japanese Unexamined Patent Application Publication No. 2002-286459, when a manual switch is operated to activate the blind spot monitor, data associated with the location of the vehicle is acquired from the navigation apparatus and stored as activation information in the control apparatus. In later operation, information indicating the current vehicle position supplied from the navigation apparatus is compared with the activation information to check whether the vehicle is at the location where the blind spot monitor was activated before. If it is detected that the vehicle is at such a location, the control apparatus outputs an activation signal to activate the blind spot monitor. The navigation apparatus manages road information on the basis of links connecting between nodes such as intersections. In a case where the manual switch is operated at a point on a road assigned a link number, activation information is produced so as to include information indicating the link number, the coordinates of the point, and the running direction of the vehicle, and the produced activation information is stored. In a case where the road has no assigned link number, activation information is produced so as to include the coordinates of the point and the running direction of the vehicle. The point at which the vehicle is located is determined using a hybrid system that is a combination of a GPS (Global Positioning System) device and an autonomous navigation device adapted to estimate the position from a vehicle speed signal supplied from a vehicle speed pulse sensor or an angular velocity signal supplied from an angular velocity sensor.

### SUMMARY OF THE INVENTION

In the control apparatus of the blind spot monitor disclosed in Japanese Unexamined Patent Application Publication No. 2002-286459, as described above, the position of the vehicle is determined using the hybrid system. However, as described also in Japanese Unexamined Patent Application Publication No. 2002-286459, a measured position value includes an error, whether the position is determined by the GPS or autonomous navigation. This means that the hybrid system does not necessarily indicate a precise vehicle position at which the vehicle is actually located. To avoid this problem, map matching is used to estimate the position at which the vehicle is very likely to be located.

There is a high probability that a particular behavior of a vehicle such as activation of the blind spot monitor occurs at a particular point. For example, in many cases, turning to the right/left from a wide road to a narrow road or kicking down occurs when a vehicle is approaching a particular point such as a home, an office, a shop, etc. There are a huge number of narrow streets or side roads branching from a corresponding one of wide roads, and many of them are spaced a very small distance apart from each other. If the distance between adjacent narrow streets is smaller than a minimum detectable distance of the navigation system, it is difficult to predict a behavior of a vehicle from a measured position of the vehicle.

In view of the above, it is an object of the present invention to provide a vehicle behavior learning apparatus and a vehicle behavior learning program capable of performing precise learning on a behavior of a vehicle which occurs at a particular point.

Accordingly, in an aspect of the present invention, there is provided a vehicle behavior learning apparatus comprising an image information acquisition unit adapted to acquire image information of a nearby area around a vehicle, an image recognition unit adapted to perform image recognition of a particular feature included in the image information, a behavior detection unit adapted to detect a behavior of the vehicle, a relation information acquisition unit adapted to acquire relation information indicating the relationship between the behavior of the vehicle detected by the behavior detection unit and the particular feature recognized by the image recognition unit before the recognition of the behavior, a detected behavior storage unit adapted to store detected behavior information including behavior property information indicating a property of the behavior of the vehicle detected by the behavior detection unit and the relation information associated with the behavior acquired by the relation information acquisition unit, and a learned behavior information generation unit adapted to produce learned behavior information indicating a result of learning on the behavior, related to the particular feature, of the vehicle, on the basis of the detected behavior information stored in the detected behavior storage unit.

In the vehicle behavior learning apparatus configured in the above-described manner, the learned behavior information indicating a result of learning on a behavior of the vehicle is produced on the basis of detected behavior information including relation information indicating the relationship between behavior property information indicating the property of the behavior detected by the behavior detection unit and the particular feature which was recognized by the image recognition unit before the behavior is detected. That is, the behavior of the vehicle is learned, and information indicating the learned behavior is produced in association with the result of image recognition of the particular feature. Thus, in this method, unlike a method in which the behavior of the vehicle is learned only using GPS measurement data or autonomous navigation measurement data, use of the image recognition of a particular feature in addition to the GPS measurement data or autonomous navigation measurement data makes it possible to perform precise learning on a behavior of a vehicle at a particular point. Furthermore, by using learned behavior information which has already been produced, it is possible to predict the behavior of the vehicle which will occur when the same particular feature as that described in the learned behavior information is detected via image recognition.

The behavior of the vehicle detected by the behavior detection unit may preferably include at least one of an operation of the vehicle and acceptance at a part of the vehicle for an operation performed by a driver. In the present invention, the operations of the vehicle include operations of various parts of the vehicle C or operations of the vehicle C as a whole which occur in response to operations performed by the driver, and operations of various parts of the vehicle C or operations of the vehicle C as a whole which occur due to an external factor applied from the outside to the vehicle C.

The behaviors of the vehicle can be classified into two types: behaviors which occur in response to operations performed by a driver; and behaviors which occur due to external factors such as road conditions or weather conditions. Specific examples of operations performed by a driver are a steering operation, a shift operation, an accelerator operation, a brake operation, an operation on an air conditioner, a window opening/closing operation, an operation on a navigation apparatus, and an audio control operation. Examples of operations of the vehicle which occur in response to operations performed by the driver are changing the running direction or a change in lateral acceleration of the vehicle which occurs in response to a steering operation, changing transmission gear ratio (kick down or shift down) according to a shift operation or an accelerator operation, and changing acceleration in the running direction which occurs in response to a brake operation or an accelerator operation. Examples of operations of the vehicle which occur due to external factors are changing lateral acceleration, for example, at a curve, a vibration or a shock which occurs when the vehicle passes over a step, and changing acceleration in the running direction when the vehicle runs on a sloping road. In the present invention, the behavior detection unit detects, as behaviors of the vehicle, at least acceptance of operations performed by a driver and/or operations of the vehicle due to operations performed by the driver or due to external factors, and thus it is possible to detect a wide variety of behaviors of the vehicle.

The relation information may include distance information indicating the distance from a recognition location of the particular feature recognized by the image recognition unit to a position of the vehicle at which the behavior of the vehicle is detected by the behavior detection unit.

In this configuration, the detected behavior information stored in the detected behavior storage unit includes the distance information indicating the distance from the feature recognition position to the vehicle behavior detection position so that the distance information is reflected in the learned behavior information. This makes it possible to predict a distance from a point at which a particular feature is detected via image recognition to a point at which a behavior of the vehicle will occur, on the basis of the learned behavior information. Thus, highly accurate prediction of the behavior of the vehicle is possible.

The relation information may preferably include feature identification information identifying the particular feature recognized by the image recognition unit.

In this configuration, detected behavior information stored in the detected behavior storage unit includes feature identification information such as a feature property or a feature recognition position identifying a particular feature. That is, the detected behavior information and the learned behavior information representing the behavior are related to information identifying the particular feature. Thus, it is possible to easily identify a particular feature related to a particular behavior, and it is possible to precisely predict a behavior of a vehicle on the basis of a result of image recognition of a particular feature.

The relation information acquisition unit may preferably acquire the relation information on the basis of at least one of information supplied from a travel distance detection unit adapted to detect a travel distance of the vehicle and information supplied from a vehicle position information acquisition unit adapted to acquire vehicle position information indicating the current position of the vehicle position.

In this configuration, it is possible to obtain relation information including at least information indicating the distance between a feature recognition position to a vehicle behavior detection position or a positional relationship thereof.

The learned behavior information may preferably include the behavior property information associated with a particular behavior and statistical relation information, wherein the behavior property information is produced on the basis of a plurality of pieces of detected behavior information associated with the same particular behavior detected a plurality of times and stored in the detected behavior storage unit, and the statistical relation information is determined statistically from the plurality of pieces of relation information associated with the particular behavior.

In this configuration, the learned behavior information is produced on the basis of a plurality of pieces of detected behavior information associated with a particular behavior detected a plurality of times and stored in the detected behavior storage unit. Therefore, even in a case where each piece of detected behavior information includes an error, errors are cancelled out ore reduced when the plurality of pieces of detected behavior information are averaged, and thus it is possible to increase the accuracy of the result of learning on the behavior of the vehicle. Furthermore, because the learned behavior information includes the statistical relation information determined statistically from the plurality of pieces of relation information for the same particular behavior, the learned behavior information has high-accuracy relation information associated with the detected behavior information. This makes it possible to more accurately predict the behavior of the vehicle on the basis of the learned behavior information.

Preferably, the particular feature may be a road marking formed on the surface of a road.

Road markings each have a particular shape and a particular size specified by laws. Use of knowledge about the particular shape and size of each road marking makes it possible to reduce processing power needed to perform image recognition of the particular features, and makes it possible to increase recognition accuracy. Thus, it becomes possible to increase the accuracy of learning of the behavior of the vehicle using the image recognition of the particular feature.

Preferably, the vehicle behavior learning apparatus may further include a learned behavior information storage unit adapted to store the learned behavior information produced by the learned behavior information generation unit.

In this configuration, the learned behavior information produced by the learned behavior information generation unit can be stored in the learned behavior information storage unit. Thus, it is possible to reduce the processing power needed to use the learned behavior information, and it is possible to quickly and easily use the learned behavior information compared with a case in which learned behavior information is produced each time the learned behavior information is needed, on the basis of the detected behavior information stored in the detected behavior storage unit.

Preferably, the vehicle behavior learning apparatus may further include a behavior prediction unit adapted to predict a behavior of the vehicle such that when a particular feature indicated by the learned behavior information is detected via image recognition, the behavior prediction unit predicts, on the basis of the learned behavior information, that a behavior of the vehicle related to the detected particular feature will occur, and the behavior prediction unit outputs a result of the prediction of the behavior.

In this configuration, if the particular feature indicated by the learned behavior information is detected via image recognition, then it is accurately predicted on the basis of the learned behavior information that the behavior of the vehicle related to the recognized particular feature will occur.

Preferably, the vehicle behavior learning apparatus may further include a recognition position information acquisition unit adapted to acquire recognition position information indicating a recognition position of a particular feature recognized by the image recognition unit, a recognized feature storage unit adapted to store recognized feature information including feature property information representing a property of the particular feature recognized by the image recognition unit and the recognition position information acquired by the recognition position information acquisition unit, and a learned feature information generation unit adapted to produce learned feature information representing a result of learning on the particular feature on the basis of a plurality of pieces of recognized feature information produced for the same particular feature detected a plurality of times via image recognition and stored in the recognized feature storage unit.

In this configuration, learned feature information is produced on the basis of a plurality of pieces of recognized feature information produced for the same particular feature detected a plurality of times via image recognition and stored in the recognized feature storage unit. Therefore, it is possible to perform learning also on the particular feature detected by the image recognition, together with the behavior of the vehicle. Because the learned feature information is based on a plurality of pieces of recognized feature information produced for the same particular feature detected a plurality of times via image recognition and stored in the recognized feature storage unit, it is possible to achieve high accuracy in learning of the particular feature. That is, even if each recognized feature information includes an error, errors are cancelled out or reduced when the plurality of pieces of recognized feature information are averaged, and thus it is possible to increase the accuracy of the result of learning on the particular feature.

Preferably, the detected behavior storage unit may be connected to a plurality of vehicles such that the detected behavior storage unit is capable of communicating with the plurality of vehicles, and the detected behavior storage unit may be adapted to store detected behavior information supplied from one or more of the plurality of vehicles.

As for a behavior which can occur in a plurality of vehicles, such as an operation due to an external factor applied to vehicles, it is possible to quickly perform learning on the behavior which occurs at a particular point, by collecting detected behavior information associated with the behavior from a plurality of vehicles. In this configuration, a plurality of pieces of detected behavior information associated with a behavior detected from a plurality of vehicles are stored in a detected behavior storage unit which are connected to the plurality of vehicles such that the detected behavior storage unit is capable of communicating with the plurality of vehicles, thereby to make it possible to quickly accumulate a large number of pieces of detected behavior information in the recognition result storage unit.

In the vehicle behavior learning apparatus configured so as to include the behavior prediction unit adapted to predict the behavior of the vehicle, the behavior prediction unit may supply the result of the prediction of the behavior to a navigation processing unit adapted to perform a calculation and/or a process for outputting guidance information associated with the vehicle.

In this configuration, on the basis of the result of the prediction of the behavior performed by the behavior prediction unit, the navigation processing unit can properly output guidance information. For example, when a right turn or a left turn is predicted as a behavior of the vehicle, a vehicle position mark is accurately displayed and accurate route guidance is provided.

In the vehicle behavior learning apparatus configured so as to include the behavior prediction unit adapted to predict the behavior of the vehicle, the behavior prediction unit may supply the result of the prediction of the behavior to a control apparatus disposed in a vehicle, the control apparatus being adapted to reproduce the operation performed by the driver.

In this configuration, the control apparatus can reproduce the operation performed by the driver before, on the basis of the result of prediction of the behavior performed by the behavior prediction unit. That is, it is possible to actively assist the operation of the driver and/or actively reproduce the same operation as that performed by the driver before. This provides a high convenience to the driver.

In the vehicle behavior learning apparatus configured so as to include the behavior prediction unit adapted to predict a behavior of the vehicle, the behavior prediction unit may supply the result of the prediction of the behavior to a control apparatus adapted to optimize the operation of the vehicle.

This configuration makes it possible for the control apparatus to optimize the behavior of the vehicle on the basis of the behavior prediction supplied from the behavior prediction unit. More specifically, for example, it is possible to optimize operations of a shift controller, an engine controller, a motor controller of a hybrid vehicle, an active suspension controller, etc., on the basis of the prediction performed by the behavior prediction unit, thereby to provide improved comfortability to a driver or a passenger during travel by the vehicle and achieve a reduction in fuel consumption.

Preferably, the learned feature information may include the feature property information associated with the same particular feature indicated by the plurality of pieces of recognized feature information and estimated position information statistically determined from the plurality of pieces of recognition position information associated with the particular feature.

In this configuration, the learned feature information includes the estimated position information statistically determined from a plurality of pieces of recognition position information for the same particular feature, and thus the learned feature information has high-accuracy information about the recognition position of the particular feature. Thus, it becomes possible to increase the accuracy of the image recognition of the particular feature.

Preferably, the vehicle behavior learning apparatus may further include a learned feature information storage unit adapted to store the learned feature information produced by the learned feature information generation unit.

This configuration makes it possible to store the learned feature information produced by the learned feature information generation unit in the learned feature information storage unit. Thus, it is possible to reduce the processing power needed to use the learned feature information, and it is possible to quickly and easily use the learned feature information compared with a case in which learned feature information is produced each time the learned feature information is needed, on the basis of the recognized feature information stored in the recognized feature storage unit.

Preferably, the recognized feature storage unit may be connected to a plurality of vehicles such that the recognized feature storage unit is capable of communicating with the plurality of vehicles, and the recognized feature storage unit may be adapted to store recognized feature information supplied from one or more of the plurality of vehicles.

This configuration makes it possible to store recognized feature information associated with a particular feature detected via image recognition by a plurality of vehicles in the recognized feature storage unit connected via communication channel to the plurality of vehicles. Thus, it is possible to quickly accumulate a large number of pieces of recognized feature information in the recognized feature storage unit.

According to an aspect of the present invention, there is provided a navigation apparatus including a vehicle behavior learning apparatus configured in the above-described manner, a map information storage unit in which map information is stored, an application program adapted to operate with reference to one or both of the learned behavior information and the map information, and a guidance information output unit adapted to operate according to the application program so as to output guidance information.

In this configuration, the application program can operate using the learned behavior information obtained via a high-accuracy learning process. Thus, it is possible to output high-accuracy guidance information. For example, when a right turn or a left turn is predicted as a behavior of the vehicle, a vehicle position mark is correctly displayed without being incorrectly matched to a point different from the actual position of the vehicle, and route guidance is properly provided in accordance with the prediction.

According to an aspect of the present invention, there is provided a vehicle behavior learning program causing a computer to execute a process comprising the steps of acquiring image information of a nearby area around a vehicle, performing image recognition of a particular feature included in the image information, detecting a behavior of the vehicle, acquiring relation information indicating the relationship between the behavior of the vehicle detected in the behavior detection step and the particular feature recognized in the image recognition step before the recognition of the behavior, storing detected behavior information in a detected behavior storage unit, the detected behavior information including behavior property information indicating a property of the behavior of the vehicle detected in the behavior detection step and the relation information associated with the behavior acquired in the relation information acquisition step, and producing learned behavior information indicating a result of learning on the behavior, related to the particular feature, of the vehicle, on the basis of the detected behavior information stored in the detected behavior storage unit.

In the process according to this vehicle behavior learning program, the learned behavior information indicating a result of learning on a behavior of the vehicle is produced on the basis of detected behavior information including relation information indicating the relationship between behavior property information indicating the property of the behavior detected in the behavior detection step and the particular feature which was recognized in the image recognition step before the behavior is detected. That is, the behavior of the vehicle is learned, and information indicating the learned behavior is produced in association with the result of image recognition of the particular feature. Thus, in this method, unlike a method in which the behavior of the vehicle is learned only using GPS measurement data or autonomous navigation measurement data, use of the image recognition of a particular feature in addition to the GPS measurement data or autonomous navigation measurement data makes it possible to perform precise learning on a behavior of a vehicle at a particular point. Furthermore, by using learned behavior information which has already been produced, it is possible to predict the behavior of the vehicle which will occur when the same particular feature as that described in the learned behavior information is detected via image recognition.

### BRIEF DESCRIPTION OF THE DRAWINGS

Fig. 1 is a block diagram schematically illustrating a navigation apparatus including a vehicle behavior learning apparatus according to an embodiment of the present invention.

Fig. 2 is a diagram illustrating an example of a format of map information stored in a map database.

Fig. 3 is a diagram illustrating an example of feature information associated with a road marking stored in a feature database.

Fig. 4 is a diagram illustrating an example of a position at which an image pickup apparatus is installed on a vehicle.

Figs. 5A to 5C illustrate a learning process on feature information on the basis of a result of image recognition of a particular feature.

Fig. 6 is a diagram illustrating a main part of Fig. 5B in an enlarged manner as to learned values stored in a learned database.

Fig. 7A is a diagram illustrating a specific example of a behavior of a vehicle, Fig. 7B illustrates an example of a content of detected behavior information associated with the behavior shown in Fig. 7A, and Fig. 7C illustrates an example of a content of learned behavior information.

Fig. 8 is a flow chart illustrating a whole procedure of a behavior learning process according to an embodiment of the present invention.

Fig. 9 is a flow chart illustrating a feature learning process according to an embodiment of the present invention.

Fig. 10 is a flow chart illustrating a behavior prediction process according to an embodiment of the present invention.

Fig. 11 is a diagram schematically illustrating an example of a manner in which a vehicle behavior is learned on the basis of a trajectory of vehicle position information acquired by a vehicle position information acquisition unit.

Fig. 12 is a diagram schematically illustrating an example of a manner in which a result of vehicle behavior prediction is used by a navigation processing unit in displaying a vehicle position mark.

Fig. 13 is a diagram illustrating an example of a system in which a part of a vehicle behavior learning apparatus according to an embodiment of the present invention is disposed in a server.

### DESCRIPTION OF THE PREFERRED EMBODIMENTS

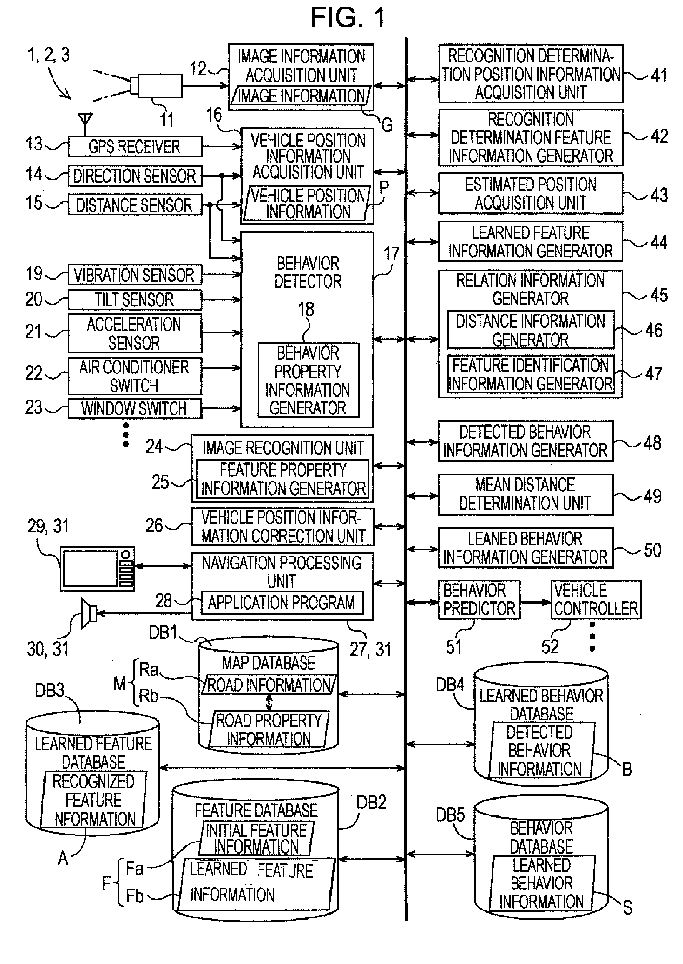

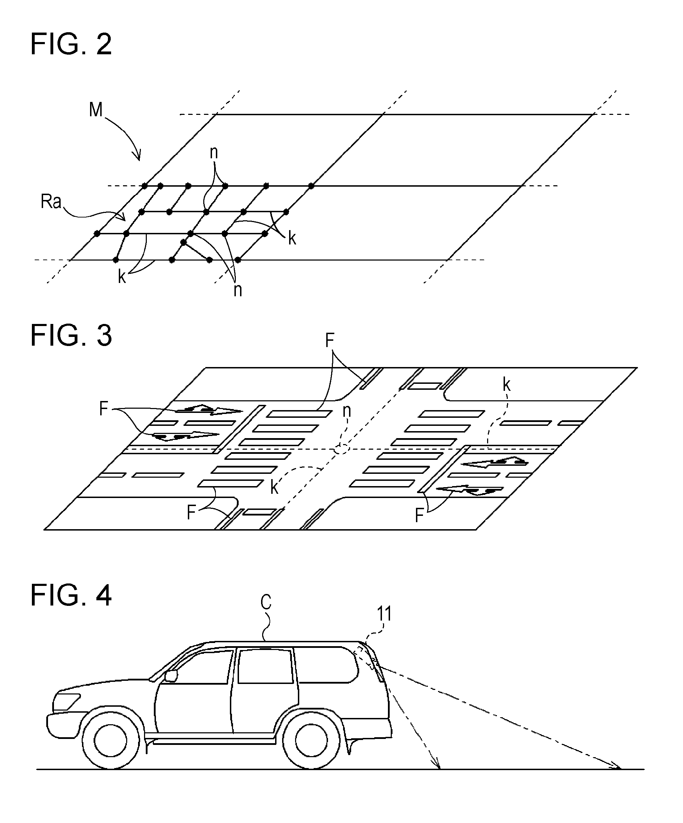

Embodiments of the present invention are described below with reference to the accompanying drawings. Fig. 1 is a block diagram schematically illustrating a configuration of a navigation apparatus 1 according to an embodiment of the present invention. The navigation apparatus 1 according to the present embodiment includes a vehicle behavior learning apparatus 2 and a vehicle position recognition apparatus 3. The navigation apparatus 1 is adapted to detect a behavior of a vehicle C (vehicle in which the present navigation apparatus 1 is installed is referred to simply as a vehicle (see, Fig. 4)), and learn the behavior of the vehicle C in relation to a particular feature detected via image recognition performed before the detection of the behavior. On the basis of the result of the learning on the behavior of the vehicle C, a prediction is made on the behavior of the vehicle C which will occur when the same particular feature is detected via the image recognition, and the vehicle is controlled properly depending on the prediction. The navigation apparatus 1 is also adapted to learn feature information F including the position of the particular feature and a feature property, on the basis of the result of the image recognition of the particular feature.

Blocks in the navigation apparatus 1 shown in Fig. 1 are functional units adapted to perform various processes on data input thereto by a processing apparatus such as a CPU, and these functional units are implemented by hardware or software (program) or a combination of hardware and software. The functional units are adapted to be capable of communicating with each other. Databases DB1 to DB5 in the navigation apparatus 1 are implemented using a hardware apparatus including a storage medium capable of storing information and a drive thereof such as a hard disk drive, a DVD drive with a DVD-ROM disk, or a CD drive with a CD-ROM disk. The functional units of the navigation apparatus 1 according to the present embodiment of the invention are described in detail below.

### Map database

A map database DB1 is a database in which map information M associated with each of many areas is described. Fig. 2 illustrates an example of map information M stored in the map database DB1. As shown in Fig. 2, the map information M includes a great number of nodes n corresponding to intersections and road information Ra representing a road network by a connection relationship between nodes n and links k corresponding to roads connecting between intersections. Each node n has information indicating the position (coordinates) on a map expressed in latitude and longitude. Each link k is connected to another link via a node n. Each link k has property information indicating a road type, a link length, a road width, a shape interpolation point for representing a link shape, etc. The road type information indicates the road type classifying the link of interest, such as an automobile road, a city road, a narrow street, or a mountain path. The property information of the link k corresponds to as road property information Rb (Fig. 1). This map database DB1 used in the present embodiment is a specific example of an implementation of the map information storage unit according to the invention. Note that in Fig. 2, road information Ra is shown only for one area, although each of other areas has its own road information Ra.

### Feature database

The feature database DB2 is a database in which information about various kinds of features disposed on or near roads is stored. In other words, the feature database DB2 is a database in which feature information F is stored. As shown in Fig. 1, in the present embodiment, two kinds of information, i.e., initial feature information Fa and learned feature information Fb are stored in the feature database DB2. The initial feature information Fa is feature information F associated with a plurality of features stored in advance in the feature database DB2. Such initial feature information Fa is available only for particular roads such as trunk roads in particular limited areas such as large cities, among various areas for which map information M including road information Ra is available. In contrast, the learned feature information Fb is feature information F which is produced by a learned feature information generator 44 on the basis of information obtained via image recognition of particular features performed by an image recognition unit 24 and which is stored in the feature database DB2. Hereinafter, the term "feature information F" is used to generically describe feature information including initial feature information Fa and learned feature information Fb. This feature database DB2 used in the present embodiment is a specific example of an implementation of the learned feature information storage unit according to the invention.

The feature information F stored in the feature database DB2 includes information about road markings (paint markings) on road surfaces. Fig. 3 illustrates examples of feature information F in terms of road markings stored in the feature database DB2. Specific examples of features associated with road markings include pedestrian crossings, stop-lines, speed limit signs indicating a maximum speed limit or the like, zebra zones, white lines (solid white lines, broken white lines, double white lines, etc.,) indicating boundaries between adjacent lanes, and marks indicating allowed running directions (for example, an arrow instructing that vehicles should run straight ahead, an arrow instructing that vehicles should turn right, etc.). The features stored as feature information F may further include traffic signals, traffic signs, land bridges, tunnels, and the like.

The feature information F includes position information of each feature and feature property information associated with the feature. The position information includes information indicating the position (coordinates) on map of a representative point of each feature related to a link k or a node n described in the road information Ra and also includes information indicating the orientation of each feature. For example, the representative point may be set at the substantially middle, in both longitudinal and lateral directions, of each feature. The feature property information includes identification information (feature ID) identifying each feature from the other features, and type information indicating the feature type of each feature or feature shape information indicating the shape, the size, the color or the like of the feature. The feature type is information indicating a feature type classified by shapes, such as a "pedestrian crossing", a "stop-line", a "speed limit sign (30 km/hours)", and the like. Preferably, the feature information F may include feature relation information indicating a relationship with another nearby feature, and distance-to-feature information indicating the distance to that other feature. The feature relation information is used, for example, to predict another feature existing ahead of a present feature detected via image recognition when the vehicle C (Fig. 4) is running on a road. The distance-to-feature information is used to predict the precise distance from the vehicle C to the feature existing ahead.

### Recognized feature database

The recognized feature database DB3 is a database in which recognized feature information A produced by a recognized feature information generator 42 described later is stored. In this recognized feature database DB3, recognized feature information A associated with each of a plurality of particular features successfully recognized by the image recognition unit 24 is stored. The specific content of the recognized feature information A stored in the recognized feature database DB3 will be described in detail later. This recognized feature database DB3 used in the present embodiment is a specific example of an implementation of the recognized feature storage unit according to the invention.

### Detected behavior database

A detected behavior database DB4 is a database in which detected behavior information B produced by the detected behavior information generator 48 (which will be described later) is stored. In this detected behavior database DB4, detected behavior information B associated with each of a plurality of behaviors detected by a behavior detector 17 is stored. Specific contents of the detected behavior information B stored in the detected behavior database DB4 will be described in detail later. This detected behavior database DB4 used in the present embodiment is a specific example of an implementation of the detected behavior storage unit according to the invention.

### Behavior database

A behavior database DB5 is a database in which learned behavior information S produced by a learned behavior information generator 50 (which will be described later) is stored. In the behavior database DB5, learned behavior information S associated with each of a plurality of behaviors detected by a learned behavior detector 17 is stored. Specific contents of the learned behavior information S stored in the behavior database DB5 will be described in detail later. This behavior database DB5 used in the present embodiment is a specific example of an implementation of the learned behavior information storage unit according to the invention.

### Image information acquisition unit

An image information acquisition unit 12 is adapted to acquire image information G of the vicinity of the vehicle taken by the image pickup apparatus 11. The image pickup apparatus 11 is an in-vehicle camera or the like having an image sensor, and is installed at a position that allows the image pickup apparatus 11 to take an image of at least a surface of a road in the vicinity of the vehicle C. For example, a rear-view camera adapted to take an image of a road surface behind the vehicle C as shown in Fig. 4 may be preferably used as for the image pickup apparatus 11 for the above purpose. The image information acquisition unit 12 captures image information output from the image pickup apparatus 11 via a frame memory (not shown) or the like at predetermined time intervals. The time intervals at which to capture the image information G may be set, for example, to a value in the range from 10 to 50 ms. The image information acquisition unit 12 is adapted to continuously capture a plurality of frames of image information G output from the image pickup apparatus 11. The acquired image information G is supplied to the image recognition unit 24.

### Vehicle position information acquisition unit

A vehicle position information acquisition unit 16 is adapted to acquire vehicle position information P indicating the current position of the vehicle C. The vehicle position information acquisition unit 16 is connected to a GPS receiver 13, a direction sensor 14, and a distance sensor 15. The GPS receiver 13 is an apparatus adapted to receive GPS signals transmitted from GPS (Global Positioning System) satellites. The GPS signals are received at intervals of 1 second and supplied to the vehicle position information acquisition unit 16. In the vehicle position information acquisition unit 16, the signals from the GPS satellites received by the GPS receiver 13 are analyzed to acquire information about the current position (coordinates), the running direction, the running speed, etc., of the vehicle C. The direction sensor 14 is a sensor adapted to detect the running direction or a change in the running direction of the vehicle C. The direction sensor 14 may be implemented using, for example, a gyroscope, a geomagnetic sensor, an optical rotation sensor or a rotary potentiometer installed on a rotating part of a steering wheel, or an angle sensor installed on a wheel part. The direction sensor 14 supplies a detection result to the vehicle position information acquisition unit 16. The distance sensor 15 is a sensor adapted to detect the vehicle speed or the travel distance of the vehicle C. The distance sensor 15 is implemented using, for example, a vehicle speed pulse sensor adapted to output a pulse signal each time a drive shaft or a wheel of a vehicle rotate a predetermined amount, or a combination of a yaw/G sensor adapted to sense the acceleration of the vehicle C and a circuit adapted to determine the integral of the acceleration. The distance sensor 15 outputs information indicating the detection result of the vehicle speed and the travel distance to the vehicle position information acquisition unit 16. In the present embodiment, the direction sensor 14 and the distance sensor 15 supplies the detection results also to the behavior detector 17.

On the information supplied from the GPS receiver 13, the direction sensor 14, and the distance sensor 15, the vehicle position information acquisition unit 16 calculates the vehicle position according to a known technique. Furthermore, the vehicle position information acquisition unit 16 acquires road information Ra associated with a nearby area around the vehicle position by reading the road information Ra from the map database DB1, and performing map matching using the acquired road information Ra according to a known technique thereby to correct the vehicle position such that the vehicle position is correctly located on a road represented by the road information Ra. As described above, the vehicle position information acquisition unit 16 acquires information about the current position of the vehicle C expressed in coordinates (latitude and longitude) and vehicle position information P including information indicating the running direction of the vehicle C.

### Behavior detector

The behavior detector 17 functions as the behavior detection unit adapted to detect the behavior of the vehicle C. As shown in Fig. 1, the behavior detector 17 detects the behavior of the vehicle C on the basis of signals output from various kinds of sensors and switches disposed in various parts of the vehicle C. Examples of sensors, which supply the signals to the behavior detector 17, are, in addition to the direction sensor 14 and the distance sensor 15 described above, a vibration sensor 19, a tilt sensor 20, an acceleration sensor 21, an accelerator sensor (not shown), a brake sensor (not shown), and a luminance sensor (not shown). Examples of various switches which output signals to the behavior detector 17 are an air-conditioner switch 22, a window switch 23, a headlight control switch (not shown), an audio control switch (not shown), a display/input unit 29 having a navigation control touch panel, and a remote controller (not shown).

The vibration sensor 19 is a sensor adapted to detect vibrations of a body of the vehicle C. The result of the detection performed by the vibration sensor 19 is used, for example, in controlling active suspension. The tilt sensor 20 is a sensor adapted to detect the tilt of the body of the vehicle C. From the result of the detection performed by the tilt sensor 20, it is possible to detect the tilt of a road on which the vehicle C is running. The acceleration sensor 21 is a sensor adapted to detect the acceleration or deceleration of the vehicle C. The accelerator sensor is a sensor adapted to detect the operation amount on the accelerator pedal performed by a driver. The brake sensor is a sensor adapted to detect the operation amount on the brake pedal performed by the driver or the force applied to the brake pedal. The luminance sensor is a sensor adapted to detect the brightness in the outside of the vehicle C thereby to automatically control the headlight.

The air-conditioner switch 22 is a switch used to set a target temperature of the air conditioner and select an the operation mode between a mode in which external air is inhaled and a mode in which air is circulated internally. The window switch 23 is a switch used to open/close a window. The headlight control switch is a switch used to turn on/off the headlight and to switch the mode between a high beam mode and a low beam mode. The audio control switch is a switch to control audio parameters such as a sound volume and to control a playback operation. The navigation display/input unit 29 and the remote controller (not shown) include a switch used to input a command to a navigation processing unit 27 in the navigation apparatus 1.

In the present embodiment, the behaviors detected by the behavior detector 17 include any detectable characteristic behavior of the vehicle C. Examples of behaviors are acceptance of operations performed by a driver at various parts of the vehicle C and operations of the vehicle C. The operations of the vehicle C include operations of various parts of the vehicle C or operations of the vehicle C as a whole which occur in response to operations performed by the driver, and operations of various parts of the vehicle C or operations of the vehicle C as a whole which occur due to an external factor applied from the outside to the vehicle C. For example, operations of various switches including the air-conditioner switch 22, the window switch 23, the headlight control switch (not shown), the audio control switch (not shown), and the navigation display/input unit 29 or the navigation remote controller (not shown), and operations performed by the driver detected by various sensors such the accelerator sensor and the brake sensor are detected by the behavior detector 17 as behaviors which occur due to acceptance, at various parts of the vehicle C, of operations performed by the driver.

For example, a change in the running direction of the vehicle C detected by the direction sensor 14 from a steering operation performed by a driver, a change in the acceleration of the vehicle C detected by the acceleration sensor 21 from an operation of an accelerator pedal or a brake pedal performed by the driver, a change in gear of a transmission performed by a shift operation or an accelerator operation performed by the driver, and the like are operations of the vehicle C which occur as a result of corresponding operations performed by the driver and which are detected by various sensors, and these operations are detected by the behavior detector 17 as behaviors of the vehicle C due to operations performed by the driver. For example, the operation of the navigation processing unit 27 in response to a driver's operation of the remote controller (not shown) or the touch panel of the navigation display/input unit 29 is also detected by the behavior detector 17 as a behavior of the vehicle C due to the operation performed by the driver. Specific examples of operations of the navigation processing unit 27 include acquisition of congestion information, change in scale of a map, change in brightness of a display screen, change in navigation route, etc., which are performed in response to an operation performed by a driver.

For example, a vibration of or a shock on the vehicle C detected by the vibration sensor 19, which may occur when the vehicle C runs on a road having a rough surface or a step, a change in the acceleration of the vehicle C detected by the tilt sensor 20 and the acceleration sensor 21, which may occur when the vehicle C runs on a sloping road, a change in the running direction of the vehicle C detected by the direction sensor 14, which may occur when the vehicle C runs along a curve, etc., are operations of the vehicle C, which occur due to external factors and which are detected by various sensors, are detected by the behavior detector 17 as behaviors of the vehicle C due to external factors. Note that driver-driven operations of the vehicle C and external-factor-driven operations of the vehicle C are not always strictly distinguishable from each other, but there are operations which belong to both types of operations.

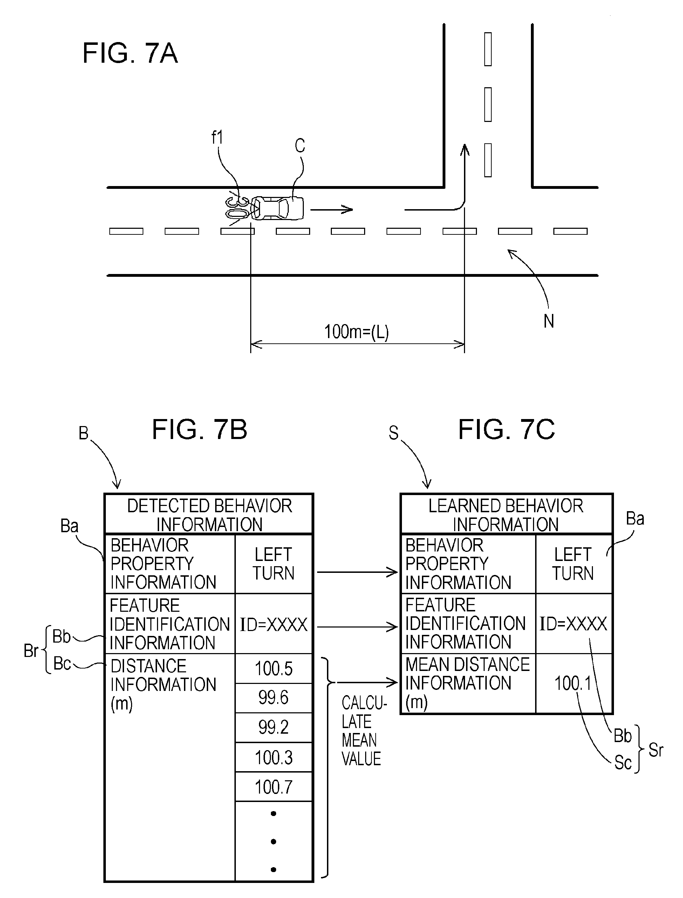

In the present embodiment, the behavior detector 17 includes a behavior property information generator 18. The behavior property information generator 18 functions as the behavior property information generation unit adapted to produce behavior property information Ba (see Fig. 7) indicating the property of a behavior detected by the behavior detector 17. As described later, the behavior property information Ba is part of detected behavior information B and learned behavior information S. The property of the behavior represented by the behavior property information Ba is information identifying the content and the type of the behavior detected by the behavior detector 17 to distinguish the behavior from the other behaviors. Thus, for example, the behavior property information Ba is described as follows.

The behaviors classified by the behavior property information Ba as behaviors due to acceptance of operation performed by a driver include, for example, "switching of an air conditioner from a mode in which air is inhaled from the outside to a mode in which air is circulated internally, "opening of a window on the driver's side", "switching of headlights from a low-beam mode to a high-beam mode", and "shift-down operation of a shift level". The behaviors classified by the behavior property information Ba as behaviors of the vehicle C due to operation performed by a driver include, for example, "making a left turn", "making a right turn", "making a left turn along a curve", "making a right turn along a curve", "accelerating", "decelerating", "stopping", "shifting down transmission", "changing the scale of a map displayed on the navigation apparatus", and "changing the navigation route of the navigation apparatus". The behaviors classified by the behavior property information Ba as behaviors of the vehicle C due to external factors include, for example, "vibration", "shock-induced movement", "running uphill", and "running downhill". Examples of behaviors due to external factors and operations performed by a driver are "making a left turn along a curve", "making a right turn along a curve", "accelerating", and "decelerating". Note that the content of the behavior property information Ba is not limited to the examples described above, but the property of the behavior represented by the behavior property information Ba may be arbitrarily determined as needed to classify behaviors.

### Image recognition unit

The image recognition unit 24 is adapted to perform image recognition of a particular feature included in the image information G acquired by the image information acquisition unit 12. In the present embodiment, the image recognition unit 24 performs image recognition of road markings as particular feature of disposed on the surface of roads. More specifically, in the image recognition of a particular feature, the image recognition unit 24 extracts outline information of the particular feature (road marking) included in the image information G by performing a binarization process or an edge detection process on the image information G. Thereafter, the image recognition unit 24 performs a pattern matching process on the extracted outline information of the feature with respect to feature values of shapes of various features which can be the particular feature whereby image recognition unit 24 extracts an image of the particular feature included in the image information G. Furthermore, the image recognition unit 24 detects the feature type of the feature having the feature value which matches the feature value of the extracted outline information of the feature, and recognizes the detected feature type as the feature type of the particular feature included in the image information G. In the case where the pattern matching was successful, the image recognition unit 24 determines that the image recognition of the particular feature has been performed successfully. On the other hand, when the pattern matching in the image recognition of the image information G was not successful, the image recognition unit 24 determines that the image recognition of the particular feature has failed.

In the present embodiment, the image recognition unit 24 includes a feature property information generator 25. The feature property information generator 25 functions as the feature property information generation unit adapted to produce feature property information representing the property of the particular feature recognized by the image recognition unit 24. As described later, the feature property information is part of recognized feature information A and learned feature information Fb. The property of the particular feature represented by the feature property information may be any property as long as the property distinguishes the particular feature from other features. Thus, the feature property information has information representing one or more of the followings: a feature type of the present particular feature; a specific shape and/or a size of the particular feature; a link ID of a link k on which the particular feature exists; and a rough position of the particular feature. Each information included in the feature property information is produced on the basis of a result of image recognition of the particular feature performed by the image recognition unit 24, the vehicle position information P indicating the position of the vehicle as of the acquisition time of the image information G from which the particular feature was recognized, etc.

### Vehicle position information correction unit

A vehicle position information correction unit 26 is adapted to correct the vehicle position information P on the basis of the result of the image recognition of the particular feature performed by the image recognition unit 24 and the feature information F associated with the particular feature stored in the feature database DB2. In the present embodiment, first, the vehicle position information correction unit 26 calculates the positional relationship between the vehicle C and the particular feature as of the time of the acquisition of the image information G including the image of the particular feature, on the basis of the result of the image recognition performed by the image recognition unit 24 and the installation position, the installation angle, and the view angle of the image pickup apparatus 11. The vehicle position information correction unit 26 then extracts the feature information F associated with the particular feature recognized by the image recognition unit 24 from the feature database DB2. Thereafter, on the basis of the result of the calculation of the positional relationship between the vehicle C and the particular feature and the position information associated with the particular feature included in the feature information F associated with the particular feature, the vehicle position information correction unit 26 calculates precise position information of the vehicle C with respect to the position information (feature information F) associated with the particular feature in the running direction of the vehicle C. On the basis of the high-precision position information of the vehicle C acquired in the above-described manner, the vehicle position information correction unit 26 corrects the information included in the vehicle position information P acquired by the vehicle position information acquisition unit 16 so as to correctly indicating the current position of the vehicle C in the running direction. Thus, the vehicle position information acquisition unit 16 acquires the high-precision vehicle position information P corrected in the above-described process.

### Navigation calculation unit

The navigation processing unit 27 is a processing unit adapted to operate according to the application program 28 to perform a navigation function such as displaying a vehicle position, searching for a route from a starting point to a destination, providing route guidance to the destination, and searching for a destination. According to the application program 28, the navigation processing unit 27 executes various navigation functions while referring to the vehicle position information P, the map information M, the learned behavior information S, and the feature information F. For example, the navigation processing unit 27 acquires map information M associated of a nearby area around the vehicle C from the map database DB1 in accordance with the vehicle position information P and displays a map image on the display screen of the display/input unit 29. Furthermore, the navigation processing unit 27 displays a vehicle position mark superimposed on the map image in accordance with the vehicle position information P. In the above-described process, the application program 28 controls the behavior prediction unit 51 (described later) to predict the behavior of the vehicle C such as a right turn, a left turn, or the like on the basis of the learned behavior information S thereby making it possible to correctly display a vehicle position mark at a correction point where the vehicle C is actually located, without having a matching error. The navigation processing unit 27 searches for a route from a specified staring point to a destination on the basis of the map information M stored in the map database DB1. The navigation processing unit 27 provides route guidance to a driver using one or both of the display/input unit 29 and audio output unit 30 in accordance with the route, detected in the searching process, from the staring point to the destination and in accordance with the vehicle position information P. The display/input unit 29 is an unit constructed in an integrated form including a display device such as a liquid crystal display device and an input device such as a touch panel or operation control switches. The audio output unit 30 is implemented using a speaker. In the present embodiment, the navigation processing unit 27, the display/input unit 29, and the audio output unit 30 function, as a whole, as the guidance information output unit 31 according to the present invention.

### Recognition position information acquisition unit

A recognition position information acquisition unit 41 is adapted to acquire recognition position information indicating a recognition position of a particular feature successfully recognized via the image recognition performed by the image recognition unit 24. In the present embodiment, the recognition position information acquisition unit 41 monitors whether a particular feature is successfully detected via the image recognition process performed by the image recognition unit 24. If a particular feature is successfully detected via the image recognition performed by the image recognition unit 24, the recognition position information acquisition unit 41 determines the recognition position of the particular feature on the basis of the result of the image recognition and the vehicle position information P acquired by the vehicle position information acquisition unit 16. More specifically, the recognition position information acquisition unit 41 acquires the vehicle position information P at the time at which the image information G including the image of the successfully recognized particular feature is acquired, and employs this acquired vehicle position information P as the recognition position information of the particular feature. Because the recognition position information of the particular feature is determined on the basis of the vehicle position information P, the recognition position information has an error included in the vehicle position information P.

### Recognized feature information generator

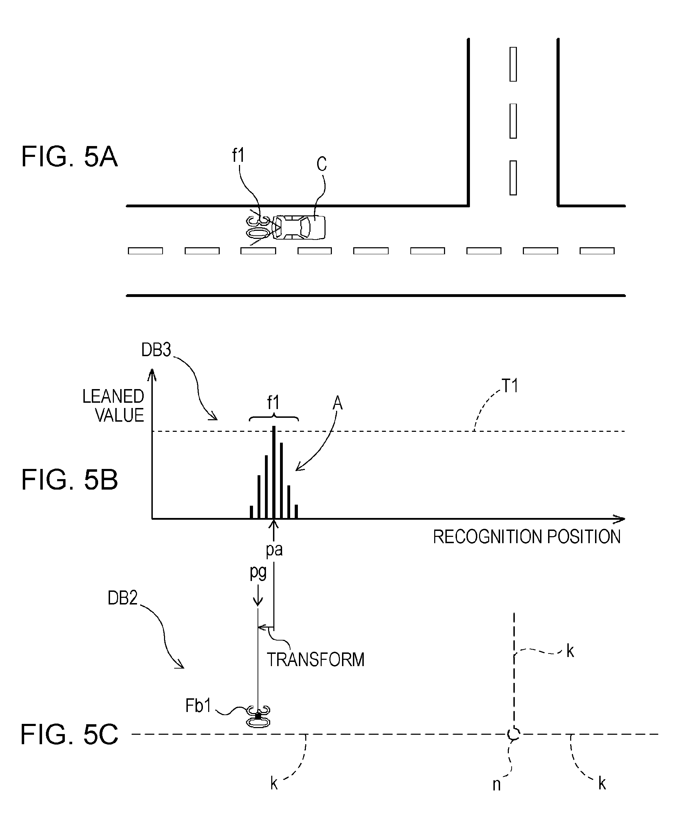

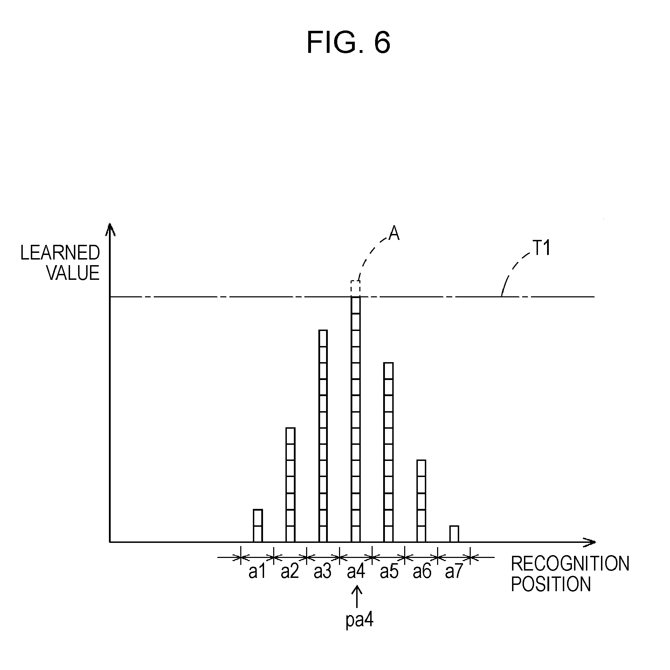

The recognized feature information generator 42 is adapted to produce recognized feature information A associated with the particular feature successfully recognized via the image recognition performed by the image recognition unit 24, wherein the recognized feature information A includes the feature property information of the particular feature produced by the feature property information generator 25 and the recognition position information of the particular feature acquired by the recognition position information acquisition unit 41. The recognized feature information generator 42 stores the produced recognized feature information A in the recognized feature database DB3. The process performed by the recognized feature information generator 42 is described below with reference to Figs. 5 and 6. Figs. 5A to 5C are diagrams provided for an explanation of the outline of the learning process on the feature information F on the basis of the result of image recognition of a particular feature. Fig. 5A illustrates an example of a road marking (a particular feature) formed on a road on which the vehicle C runs. In this specific example, the image recognition unit 24 performs image recognition on characters "30" of the speed limit sign as a particular feature f1. Fig. 5B illustrates an example of recognized feature information A stored in the recognized feature database DB3. Fig. 5C illustrates an example of data stored in the feature database DB2, the data being modified according to the learning result stored in the recognized feature database DB3.

In the present embodiment, as shown in Fig. 5B, on the basis of the recognition position information acquired by the recognition position information acquisition unit 41, the recognized feature information generator 42 produces recognized feature information A associated with each particular feature as learned values in a range within which recognition positions of the particular feature indicated by the recognition position information falls. Each time the particular feature is recognized, the recognized feature information generator 42 adds the learned value individually for each position range and stores the result. In the present example, the position range is a road segment defined along a link k corresponding to a particular road and having a predetermined length. For example, each position range is defined to have a length of 0.5 meters along a link k. The learned value is a value which is added, each time one particular feature is successfully detected via the image recognition, to the position range to which the recognition position of the particular feature belongs, in the recognized feature database DB3. More specifically, for example, each time one particular feature is successfully detected via the image recognition, one point is added. That is, in the present embodiment, the recognized feature information A includes the recognition position information of particular feature, i.e., information indicating the position range in which the recognition position of the particular feature falls, and also include information indicating the learned value "1" thereof.

Fig. 6 illustrates, in an enlarged manner, part of Fig. 5B in terms of learned value associated with the particular feature f1 stored in the recognized feature database DB3. In the example shown in Fig. 5A, when the particular feature f1 is successfully recognized via the image recognition, if the recognition position of the particular feature f1 acquired by the recognition position information acquisition unit 41 is within, for example, a position range represented by "a4" in Fig. 6, then 1 is added to the learned value of the position range a4 as represented by a broken line in Fig. 6. If the same road is passed through the vehicle C a plurality of times, and thus the same particular feature f1 is recognized the plurality of times via the image recognition, then, as shown in Fig. 5B and Fig. 6, the plurality of pieces of recognized feature information A indicating learned values, which have been produced for the same particular feature detected the plurality of times, are accumulated in the recognized feature database DB3 in such a manner that learned values are grouped into the position ranges according to the recognition positions of the particular feature. If the learned value reaches a value greater than a predetermined learning threshold value T1, learned feature information Fb associated with the particular feature is produced by the learned feature information generator 44 and is stored in the feature database DB2. In the example shown in Fig. 5C, learned feature information Fb1 associated with the particular feature f1 is stored in the feature database DB2.

In order to identify the particular feature indicated by the recognized feature information A so as to distinguish it from the other particular features, the recognized feature information has feature property information of the particular feature produced by the feature property information generator 25. That is, the recognized feature information A stored in the recognized feature database DB3 includes recognition position information indicating the position range of the particular feature and information indicating the learned value "1" thereof, and the recognized feature information A is related to feature property information indicating the feature property of the particular feature. As described above, the feature property information includes one or more pieces of information selected from the feature type of the particular feature, the shape and the size of the particular feature, the link ID of the link k on which the particular feature exists, and a roughly expressed position of the particular feature.

### Estimated position judgment unit

An estimated position acquisition unit 43 is adapted to obtain estimated position information associated with each particular feature statistically determined from a plurality of pieces of recognition position information associated with the particular feature stored in the recognized feature database DB3. More specifically, the estimated position acquisition unit 43 reads, from the recognized feature database DB3, a plurality of pieces of recognized feature information A associated with the same particular feature detected a plurality of times via the image recognition, and the estimated position acquisition unit 43 determines the estimated recognized position pa of the particular feature as shown in Fig. 5B. The estimated position acquisition unit 43 then converts the estimated recognized position pa into a position on a road thereby obtaining an estimated position pg of the particular feature. More specifically, in the present embodiment, first, the estimated position acquisition unit 43 determines the representative value of the distribution of the plurality of pieces of recognized feature information A associated with the sane particular feature, and employs the determined representative as the estimated recognized position pa of the particular feature. In the present embodiment, the mode is employed as the representative value of the distribution. That is, the estimated position acquisition unit 43 detects a learned value expressed as recognized feature information A associated with a particular feature which reaches a value equal to or greater than a predetermined threshold value T1 earliest at a position among all positions, and the estimated position acquisition unit 43 employs this position as the estimated recognized position pa of the particular feature. As one example, a method of determining the estimated recognized position pa of the particular feature f1 shown in Figs. 5A to 5C is described below. As shown in Fig. 6, learned values expressed as recognized feature information A associated with the particular feature f1 exceed the learning threshold value T1 in the position range a4 earliest among all position ranges. Thus, the estimated position acquisition unit 43 employs the representative position of the position range a4, for example, the central position pa4 of the position range a4, as the estimated recognized position pa of the particular feature f1.

The estimated position acquisition unit 43 then converts the estimated recognized position Pa of the particular feature determined in the above-described manner into a position of the particular feature on a road and employs the resultant position as the estimated position pg of the particular feature. The conversion may be performed on the basis of the positional relationship between the vehicle C and the particular feature in the image information G, theoretically determined from the installation, the installation angle, and the view angle of the image pickup apparatus 11. Information indicating the estimated position pg of the particular feature determined in the above-described manner by the estimated position acquisition unit 43 is acquired as the estimated position information associated with the particular feature.

### Learned feature information generator

The learned feature information generator 44 functions as the learned feature information generation unit adapted to produce learned feature information Fb indicating a result of learning on the particular feature on the basis of a plurality of pieces of recognized feature information A associated with the same particular feature produced via image recognition performed for the same particular feature a plurality of times and stored in the recognized feature database DB3. The learned feature information Fb includes feature property information associated with the same particular feature as that indicated in the plurality of pieces of recognized feature information A and also includes the estimated position information indicating the estimated position pg of the particular feature determined by the estimated position acquisition unit 43 by statistically processing the plurality of pieces of recognition position information A associated with the particular feature. That is, the learned feature information generator 44 produces the learned feature information Fb so as to relate the estimated position information indicating the estimated position pg acquired by the estimated position acquisition unit 43 for each particular feature to the feature property information included in the recognized feature information A associated with the particular feature. In the production of the learned feature information Fb, the learned feature information generator 44 attaches identification information (feature ID) as one of items of feature property information to each learned feature information Fb to distinguish each feature from the other features. Thus, as with the initial feature information Fa, the learned feature information Fb includes position information and associated feature property information. The learned feature information Fb produced by the learned feature information generator 44 is stored in the feature database DB2. In the specific example shown in Fig. 5C, the learned feature information Fb1 is produced by the learned feature information generator 44 and stored in the feature database DB2. Note that in Fig. 5C, a solid square indicates the estimated position pg of the particular feature f1 represented by the position information of the learned feature information Fb1.

### Relation information generator

A relation information generator 45 functions as the relation information acquisition unit adapted to acquire relation information Br (Fig. 7) such that when a behavior of the vehicle C is detected by the behavior detector 17, the relation information generator 45 produces relation information Br indicating the relationship between the detected behavior of the vehicle C and the particular feature recognized by the image recognition unit 24 before the detection of the behavior. Note that the relation information generator 45 acquires the relation information Br on the basis of at least one of information provided by the distance sensor 15 serving as the travel distance detection unit adapted to detect the travel distance of the vehicle C and information provided by the vehicle position information acquisition unit 16 adapted to acquire the vehicle position information P indicating the current position of the vehicle C. To this end, in the present embodiment, as shown in Fig. 1, the relation information generator 45 has a distance information generator 46 and a feature identification information generator 47. The process performed by the distance information generator 46 and the process performed by the feature identification information generator 47 are described in detail below.

Referring to Figs. 7A to 7C, a specific example of detected behavior information B associated with a behavior of the vehicle C and a specific example of a content of learned behavior information S are described. Fig. 7A illustrates a specific example of a road on which the vehicle C runs. In the example shown in Fig. 7A, after the vehicle C passes over a particular feature f1, i.e., a maximum speed limit sign "30", the vehicle C travels 100 meters, and then the vehicle C makes a left turn at an intersection N. Thus, in this specific example, the behavior detector 17 detects the "left turn" as a behavior of the vehicle C at the intersection N when the vehicle C traveled 100 meters after the image recognition unit 24 detected the particular feature f1 via the image recognition. Fig. 7B illustrates an example of detected behavior information B associated with this behavior, and Fig. 7C illustrates an example of learned behavior information S associated with the behavior.

### Distance information generator

The distance information generator 46 functions as the distance information generation unit adapted to produce distance information Bc (see Fig. 7B) indicating the distance from the recognition position of the particular feature recognized by the image recognition unit 24 to the position at which the behavior of the vehicle C was detected by the behavior detector 17. More specifically, as shown in Fig. 7A, after the image recognition unit 24 detects a particular feature f1 via the image recognition, if the behavior detector 17 detects a behavior of the vehicle C, then the distance information generator 46 determines the distance from the particular feature recognition position to the behavior detection position and produces distance information Bc indicating the detected distance. Hereinafter, the particular feature recognition position to the behavior detection position will be referred to simply as the feature-behavior distance. For the above purpose, in the present embodiment, the distance information generator 46 uses the travel distance of the vehicle C detected by the distance sensor 15 to determine the feature-behavior distance L.

More specifically, on the basis of the information output from the distance sensor 15, the distance information generator 46 detects the distance from the position at which the vehicle C was found when the particular feature was detected by the image recognition unit 24 to the position at which the vehicle C was found when the behavior of the vehicle C was detected, and the distance information generator 46 determines the detected distance as the feature-behavior distance L. By using the information output from the distance sensor 15, it is possible to detect the feature-behavior distance L without using the vehicle position information P. The distance information generator 46 produces distance information Bc indicating the detected feature-behavior distance L. In the specific example shown in Fig. 7A, the feature-behavior distance L is detected as 100 meters. Note that the distance information Bc indicating the feature-behavior distance L, produced by the distance information generator 46 on the basis of the information output from the distance sensor 15, includes an error of the distance sensor 15 as shown in Fig. 7B.

### Feature identification information generator

The feature identification information generator 47 functions as the feature identification information generation unit adapted to produce feature identification information Bb identifying the particular feature recognized by the image recognition unit 24. More specifically, as in the example shown in Fig. 7A, when a behavior of the vehicle C is detected by the behavior detector 17 after the recognition of the particular feature f1 by the image recognition unit 24, the feature identification information generator 47 produces feature identification information Bb identifying the recognized particular feature f1. In the present embodiment, the feature identification information Bb is given by identification information pointing to recognized feature information A stored in the recognized feature database DB3 (in the example shown in Fig. 7B, the feature identification information Bb is given as "ID = XXXX"). More specifically, after the recognition of the particular feature f1 by the image recognition unit 24, when the recognized feature information A associated with the recognized particular feature f1 is produced by the recognized feature information generator 42 and stored in the recognized feature database DB3, the feature identification information generator 47 acquires the identification information identifying the recognized feature information A, and produces the feature identification information Bb by employing the acquired identification information as the feature identification information Bb. Thus, by referring to the recognized feature information A stored in the recognized feature database DB3 on the basis of the feature identification information Bb included in the detected behavior information B or the learned behavior information S, it is possible to identify the feature property and the recognition position of the particular feature indicated by the detected behavior information B or the learned behavior information S.

The identification information identifying the recognized feature information A stored in the recognized feature database DB3 is not limited to the feature ID assigned to the each recognized feature information A, but other information may be used as long as the information correctly identifies the recognized feature information A. For example, information indicating the storage location of each recognized feature information A in the recognized feature database DB3 may be used as the identification information.

In the present embodiment, as shown in Fig. 7B, the relation information Br is produced so as to include the distance information Bc produced by the distance information generator 46 and the feature identification information Bb produced by the feature identification information generator 47.

### Detected behavior information generator

The detected behavior information generator 48 functions as the detected behavior information generation unit adapted to produce detected behavior information B including the behavior property information Ba indicating the property of the behavior of the vehicle C detected by the behavior detector 17 and the relation information Br associated with the behavior acquired by the relation information generator 45. In the present embodiment, as described above, the behavior property information Ba is produced by the behavior property information generator 18 when the behavior of the vehicle C is detected by the behavior detector 17. The distance information Bc and the feature identification information Bb included in the relation information Br are produced by the distance information generator 46 and the feature identification information generator 47 of the relation information generator 45. The detected behavior information generator 48 produces the detected behavior information B so as to relate the behavior property information Ba to the relation information Br. The detected behavior information generator 48 stores the produced detected behavior information B in the detected behavior database DB4.

When there are a plurality of pieces of detected behavior information B associated with the same behavior, the property of the behavior and the particular feature detected via the image recognition before the detection of the behavior are the same for all pieces of detected behavior information B. Therefore, in the present embodiment, for a plurality of pieces of detected behavior information B associated with the same behavior, the detected behavior information generator 48 produces a set of detected behavior information B including a single piece of behavior property information Ba and a single piece of feature identification information Bb and stores the set of detected behavior information B in the detected behavior database DB4. Fig. 7B illustrates an example in which a plurality of pieces of detected behavior information B associated with the same behavior ("left turn") in the example shown in Fig. 7A are stored as a single set. In this example, the detected behavior information B includes a plurality of pieces of distance information Bc all of which are related to a single piece of behavior property information Ba of a behavior "left turn" and a single piece of feature identification information Bb having identification information "ID = XXXX". Because each of the plurality of pieces of distance information Bc includes a detection error of the distance sensor 15, values are slightly different from each other, although the values are nearly equal to the actual feature-behavior distance L, i.e., 100 meters.

### Mean distance determination unit

A mean distance determination unit 49 determines the mean value of a plurality of pieces of distance information Bc associated with the same behavior indicated in a plurality of pieces of detected behavior information B associated with the same behavior, and produces mean distance information Sc indicating the mean value. In the present embodiment, the mean distance determination unit 49 determines the means value for a plurality of pieces of distance information Bc of detected behavior information B stored as a single set including common behavior property information Ba and feature identification information Bb. The mean distance determination unit 49 produces mean distance information Sc indicating the determined mean value of the plurality of pieces of distance information Bc associated with the same behavior. In the example of learned behavior information S shown in Fig. 7C, the mean distance information Sc is given by the mean value (100.1 meters) of all values of the plurality of pieces of distance information Bc in the detected behavior information B associated with the single behavior ("left turn") shown in Fig. 7B. Thus, statistical relation information Sr according to the present invention is obtained, wherein the statistical relation information Sr includes the mean distance information Sc produced by the mean distance determination unit 49 and the feature identification information Bb which is common for all pieces of detected behavior information B associated with the same behavior. Thus, in the present embodiment, the mean distance determination unit 49 functions as the statistical relation information generation unit adapted to produce statistical relation information Sr statistically determined from a plurality of pieces of relation information Br associated with the same behavior indicated in a plurality of pieces of detected behavior information B.

### Learned behavior information generator

The learned behavior information generator 50 functions as the learned behavior information generation unit adapted to produce learned behavior information S indicating a result of learning on a behavior of the vehicle C related to a particular feature on the basis of the detected behavior information B stored in the detected behavior database DB4. In the present embodiment, the learned behavior information generator 50 produces learned behavior information S on the basis of a plurality of pieces of detected behavior information B associated with the same behavior detected a plurality of times and stored in the detected behavior database DB4. The learned behavior information S includes the behavior property information Ba associated with the same behavior indicated in the plurality of pieces of detected behavior information B and the statistical relation information Sr statistically determined from the plurality of pieces of relation information Br associated with the same behavior. The statistical relation information Sr includes the mean distance information Sc produced by the mean distance determination unit 49 and the feature identification information Bb which is common for the plurality of pieces of detected behavior information B associated with the same behavior. Thus, the learned behavior information S relates behavior property information Ba and feature identification information Bb which are common for a plurality of pieces of detected behavior information B associated with a particular single behavior to mean distance information Sc indicating the mean value of a plurality of pieces of distance information Bc associated with the same behavior indicated in a plurality of pieces of detected behavior information B associated with the same behavior. In the example shown in Fig. 7C, the learned behavior information S includes a single piece of behavior property information Ba having a value "left turn" indicating a behavior, a single piece of feature identification information Bb having identification information "ID = XXXX", and mean distance information Sc having a value of 1001.1 related to the behavior property information Ba and the feature identification information Bb. The learned behavior information generator 50 stores the produced learned behavior information S in the behavior database DB5.

In a case where only one piece of detected behavior information B is stored in the detected behavior database DB4 for a particular behavior, the learned behavior information generator 50 produces learned behavior information S on the basis of this one piece of detected behavior information B. In this case, the mean distance information Sc included in the statistical relation information Sr of the learned behavior information S is identical to the distance information Bc of the detected behavior information B, and thus the learned behavior information S has substantially the same content as the detected behavior information B. In the following explanation, it is assumed that learned behavior information S is produced on the basis of a plurality of pieces of detected behavior information B.

### Behavior Prediction unit

The behavior prediction unit 51 is adapted to predict a behavior of the vehicle C on the basis of the learned behavior information S stored in the behavior database DB5. More specifically, when a particular feature indicated by the learned behavior information S is detected via image recognition, the behavior prediction unit 51 predicts that the behavior of the vehicle C related to the detected particular feature will occur, and the behavior prediction unit 51 outputs a result of the prediction of the behavior. To accomplish the prediction, when the image recognition unit 24 detects a particular feature via image recognition, the behavior prediction unit 51 acquires learned behavior information S associated with the detected particular feature from the behavior database DB5 by reading the learned behavior information S from the behavior database DB5 on the basis of the feature identification information Bb included in each learned behavior information S. The behavior prediction unit 51 then predicts the behavior of the vehicle C on the basis of the behavior property information Ba included in the acquired learned behavior information S and the mean distance information Sc. More specifically, the behavior prediction unit 51 predicts that the behavior of the vehicle C indicated by the behavior property information Ba will occur when the vehicle C travels the distance indicated by the mean distance information Sc from the feature recognition position at which the feature was detected via the image recognition. The behavior prediction unit 51 supplies the result of the prediction of the behavior to various control units of the vehicle C thereby to properly control the operation of the vehicle C. Examples of units/devices to which the prediction result is supplied are the navigation processing unit 27 adapted to perform calculation/processing to output guidance information and the vehicle controller 52 which is a controller adapted to reproduce an operation performed by a driver or optimize the operation of the vehicle when a driver drives the vehicle or when an external factor is applied to the vehicle. Some specific examples will be shown later in terms of manners in which the prediction of the behavior is used.

### Behavior learning process

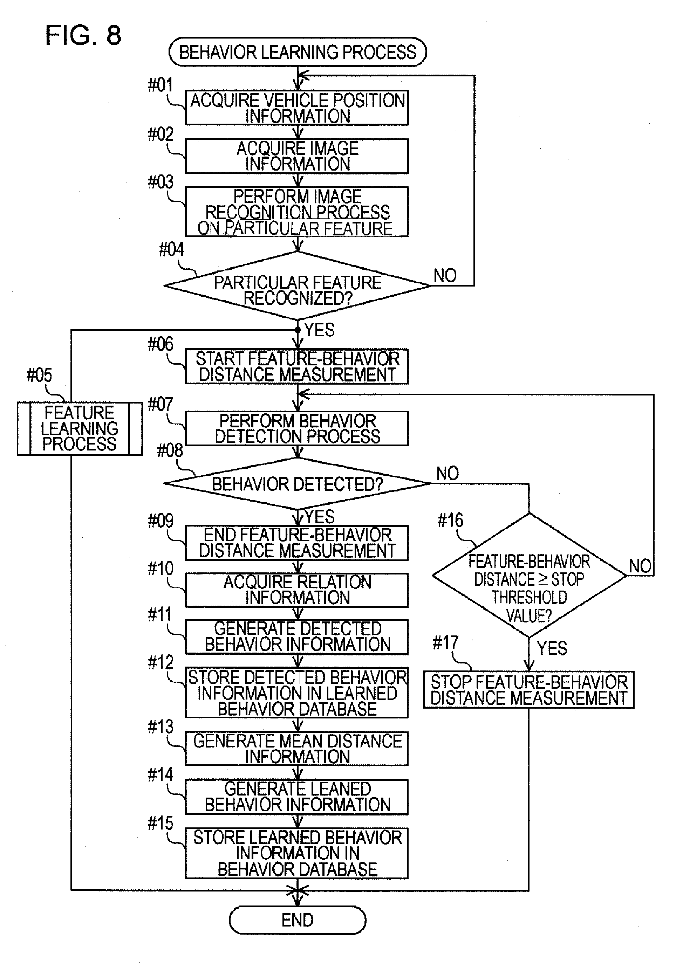

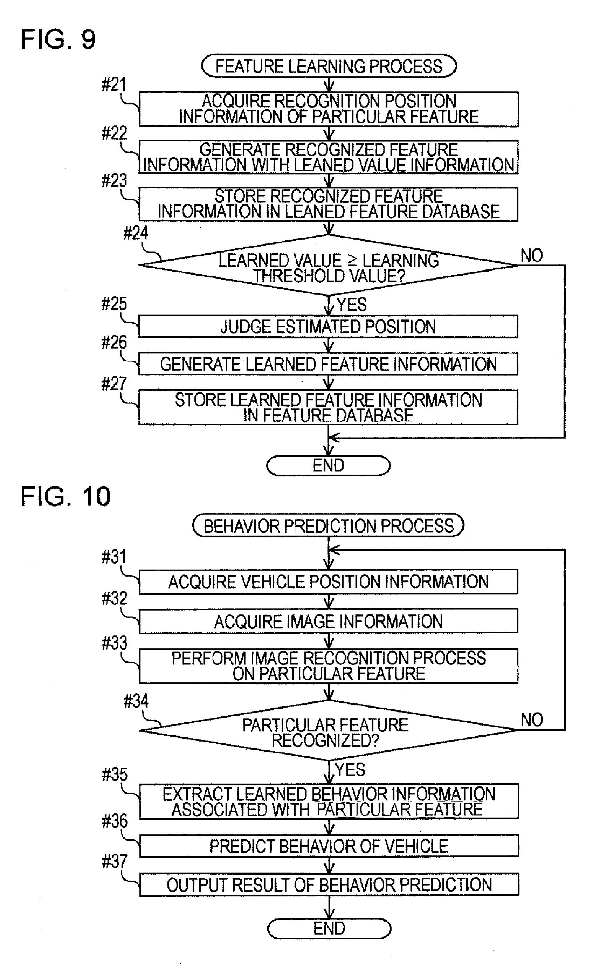

Next, a procedure (vehicle behavior learning program) of learning on behaviors of the vehicle C performed by the vehicle behavior learning apparatus 2 included in the navigation apparatus 1 according to an embodiment of the present invention is described below. Fig. 8 is a flow chart illustrating a whole procedure of the behavior learning process according to the present embodiment. Fig. 9 is a flow chart illustrating a specific example of a feature learning process which is part of the behavior learning process shown in Fig. 8. The procedure described below is executed by hardware or software (program) by which the functions described above are implemented or a combination of hardware and software. In a case where the functions described above are implemented by a program, the processing unit included in the navigation apparatus 1 operates as a computer to execute the program thereby to implement the functions. First, the whole procedure of the behavior learning process is described below.

### Whole procedure of behavior learning process

In the vehicle behavior learning apparatus 2, first, as shown in Fig. 8, vehicle position information P is acquired by the vehicle position information acquisition unit 16 (step #01). Image information G associated with the vicinity of the vehicle C taken by the image pickup apparatus 11 is acquired by the image information acquisition unit 12 (step #02). Image recognition of a particular feature included in the image information G is performed by the image recognition unit 24 (step #03). If no feature is detected in step #03 (that is, if the answer to step #04 is No), the processing flow returns to step #01 to again acquire vehicle position information P and image information G. In a case where in step #03, a particular feature included in the image information G is detected (that is, if the answer to step #04 is Yes), a feature learning process is executed (step #05). The details of the feature learning process will be described later with reference to the flow chart shown in Fig. 9.

In parallel with the feature learning process in step #05, the distance information generator 46 of the relation information generator 45 starts the measurement of the feature-behavior distance L (step #06). Note that the feature-behavior distance L refers to the distance from the position at which the feature was detected in step #03 to the position at which a behavior of the vehicle C is detected in step #07. In step #06, the position at which the vehicle C was found when the particular feature was detected in step #03 is set as a measurement start point, the distance measurement is started. The behavior detector 17 then performs a process of detecting a behavior of the vehicle C (step #07). In this behavior detection process in step #07, the behavior detector 17 is maintained in a state that allows the behavior detector 17 to detect a behavior of the vehicle C. While no behavior of the vehicle C is detected (that is, while the answer to step #08 is No), if the measured feature-behavior distance L has reached a value equal to or greater than a predetermined threshold value (that is, if the answer to step #16 is Yes), the measurement of the feature-behavior distance L is stopped (step #17), and the behavior learning process is ended. On the other hand, when the measured feature-behavior distance L is smaller than the predetermined threshold value (the answer to step #16 is No), if a behavior of the vehicle C is detected (that is, if the answer to step #08 is Yes), the measurement of the feature-behavior distance L by the distance information generator 46 is completed (step #09). Thereafter, relation information Br is acquired which includes distance information Bc indicating the measured feature-behavior distance L and feature identification information Bb produced by the feature identification information generator 47 (step #10).

Next, the detected behavior information generator 48 produces detected behavior information B including behavior property information Ba indicating the property of the behavior of the vehicle C detected in step #07 and the relation information Br acquired in step #10 for the detected behavior (step #11). The produced detected behavior information B is stored in the detected behavior database DB4 (step #12). Next, on the basis of a plurality of pieces of detected behavior information B associated with the same behavior stored in the detected behavior database DB4 via the above process, the mean distance determination unit 49 produces mean distance information Sc (step #13). As described above, the mean distance information Sc is information indicating the mean value of a plurality of pieces of distance information Bc associated with the same behavior indicated in a plurality of pieces of detected behavior information B associated with the same behavior. Thereafter, on the basis of a plurality of pieces of detected behavior information B stored in the detected behavior database DB4 for same behavior detected a plurality of times, the learned behavior information generator 50 produces learned behavior information S indicating a result of the learning on the behavior of the vehicle C related to the detected particular feature (step #14). The produced learned behavior information S is stored in the behavior database DB5 (step #15). Thus, the behavior learning process performed by the vehicle behavior learning apparatus 2 is completed.

### Procedure of feature learning process

The feature learning process, which is part of the behavior learning process, according to the present embodiment is described below. The feature learning process in step #05 in Fig. 8 is performed as follows. First, as shown in Fig. 9, the recognition position information acquisition unit 41 acquires recognition position information associated with the feature detected in step #03 in Fig. 8 on the basis of vehicle position information P (step #21). Next, the recognized feature information generator 42 produces recognized feature information A including information indicating a learned value (step #22). That is, as described above, the recognized feature information A is produced such that the feature property information produced by the feature property information generator 25 for the detected particular feature when the feature was detected via image recognition is related to the information indicating the learned value in each position range based on the recognition position information acquired in step #21 for the detected particular feature The recognized feature information A including information about learned values such as that shown in Fig. 5B is stored in the recognized feature database DB3 (step #23). In a case where any learned value indicated by the recognized feature information A for the detected particular feature stored in the recognized feature database DB3 is smaller than the predetermined threshold value T1 (that is, if the answer to step #24 is No), the feature learning process is ended.

On the other hand, in a case where a learned value indicated by the recognized feature information A stored in the recognized feature database DB3 for the detected feature is equal to or greater than the predetermined threshold value T1 (that is, if the answer to step $24 is Yes), the estimated position acquisition unit 43 determines the estimated position pg of the particular feature (step #25). Thereafter, the learned feature information generator 44 produces learned feature information Fb by which the estimated position pg determined in step #25 for the particular feature is related to the feature property information of the particular feature included in the recognized feature information A (step #26). The produced learned feature information Fb is then stored in the feature database DB2 (step #27). The feature learning process is then ended.

### Behavior prediction process

Next, a procedure (a vehicle behavior prediction program) of a vehicle behavior prediction process performed by the vehicle behavior learning apparatus 2 included in the navigation apparatus 1 according to an embodiment of the present invention is described below. Fig. 10 is a flow chart illustrating the procedure of the behavior prediction process according to the present embodiment of the invention. The procedure described below is executed by hardware or software (program) by which the functions described above are implemented or a combination of hardware and software. In a case where the functions described above are implemented by a program, the processing unit included in the navigation apparatus 1 operates as a computer to execute the program thereby to implement the functions.

In the behavior prediction process performed by the vehicle behavior learning apparatus 2, as shown in Fig. 10, first, the vehicle position information acquisition unit 16 acquires vehicle position information P (step #31). Next, the image information acquisition unit 12 acquires image information G of an image of the vicinity of the vehicle C taken by the image pickup apparatus 11 (step #32). Thereafter, the image recognition unit 24 performs the image processing on the image information G to detect a feature included in the image information G (step #33). If no feature is detected in step #33 (that is, if the answer to step #34 is No), the processing flow returns to step #31 to again acquire vehicle position information P and image information G. If a particular feature is detected from the image information G in step #33 (that is, if the answer to step #34 is Yes), the behavior prediction unit 51 acquires learned behavior information S associated with the detected particular feature by reading the learned behavior information S from the behavior database DB5 (step #35).

On the learned behavior information S acquired in step #35, the behavior prediction unit 51 predicts a behavior of the vehicle C (step #36). In this step, as described above, on the basis of the behavior property information Ba and the mean distance information Sc included in the learned behavior information S, the behavior prediction unit 51 predicts that the behavior of the vehicle C represented in the behavior property information Ba will occur when the vehicle C travels the distance indicated by the mean distance information Sc from the recognition position at which the particular feature was detected via the image recognition. Thereafter, the behavior prediction unit 51 supplies the result of the prediction of the behavior to various control units of the vehicle C thereby to properly control the operation of the vehicle C. (step #37). Thus, the behavior prediction process performed by the vehicle behavior learning apparatus 2 is completed.

### Example 1

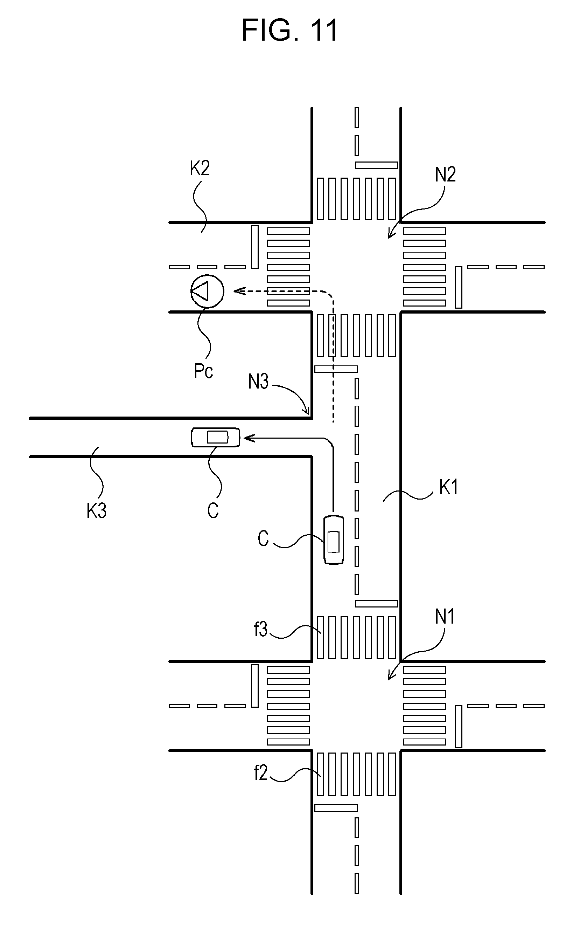

A specific example of learning performed by the vehicle behavior learning apparatus 2 according to the present invention is described below. Fig. 11 is a diagram schematically illustrating an example of a manner in which a vehicle behavior is learned on the basis of a trajectory of vehicle position information P acquired by the vehicle position information acquisition unit 16. In this specific example, the vehicle C runs along a trunk road K1. At an intersection N3 before a great intersection N2 at which the trunk road K1 crosses another trunk road K2, the vehicle C turns left to a narrow street K3. In a case where the narrow street K3 is located close to the trunk road K2 that is, the distance between intersections N2 and N3 is small, there is a possibility that the vehicle position information acquisition unit 16 map-matches the current position of the vehicle C indicated by the vehicle position information P to a wrong road. For example, there is a possibility that the current position of the vehicle C indicated by the vehicle position information P is incorrectly map-matched to the trunk road K2 as represented by a broken line in Fig. 11, and the vehicle position mark Pc indicating the current position of the vehicle C represented by the vehicle position information P is incorrectly displayed on the trunk road K2 on the display/input unit 29, although the vehicle C actually turns left to the narrow street K3 as represented by a solid line in Fig. 11. Such wrong matching may be automatically corrected by the navigation processing unit 27 or manually by a driver. However, even when a correction is made, the vehicle position mark Pc is displayed at a wrong point different on the display/input unit 29 for a certain time period, which may be short or long. The vehicle behavior learning apparatus 2 according to the present invention is adapted to minimize the possibility of such wrong matching.

In the example shown in Fig. 11, before reaching the intersection N3, a driver of the vehicle C operates a direction indicator and reduces the speed of the vehicle C by operating brakes. At the intersection N3, the driver operates a steering wheel so as to make a left turn. The operations of the direction indicator, the brakes, and the steering wheel performed by the driver are detected as behaviors of the vehicle by the behavior detector 17. When the vehicle C turns to the left, a change in the running direction of the vehicle C is detected by the direction sensor 24. This change in the running direction is detected by the behavior detector 17 as a behavior of the vehicle C due to an operation performed by the driver. In the present example, before the left turn is detected as a behavior of the vehicle C, the vehicle C passed through an intersection N1. Before and after the intersection N1, there are pedestrian crossings which are detected as particular features f2 and f3 by the image recognition unit 24. Thus, in this example, detected behavior information B indicating a behavior of the vehicle C related to one or both of the particular features f2 and f3 is produced and stored in the detected behavior database DB4.

In a case where the left turn to the narrow street K3 is performed on the way home, the vehicle C passes through the same path from the trunk road K1 to the narrow street K3 a plurality of times. Therefore, a plurality of pieces of detected behavior information B associated with the same behavior of the vehicle C are stored in the detected behavior database DB4. On the basis of the plurality of pieces of detected behavior information B, learned behavior information S indicating a result of learning on the behavior of the vehicle C in association with the particular feature f2 and f3 is produced and stored in the behavior database DB5. The produced learned behavior information S includes behavior property information Ba indicating behaviors of the vehicle C such as a left turn operation and an operation of the direction indicator performed by the driver, feature identification information Bb identifying one or both of the particular features f2 and f3, and mean distance information Sc indicating the mean feature-behavior distance L.

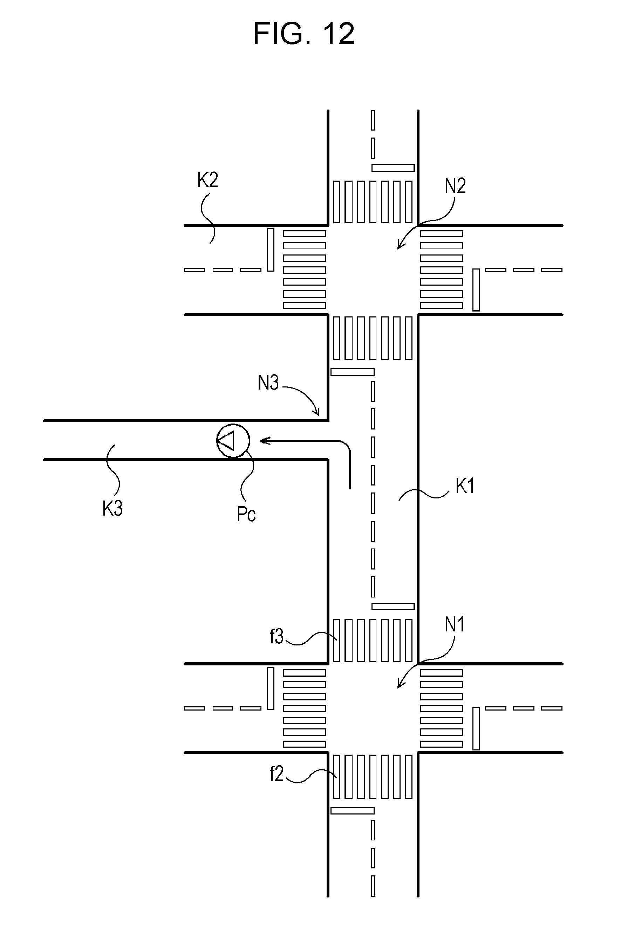

Fig. 12 is a diagram schematically illustrating an example of a manner in which a result of vehicle behavior prediction is used by the navigation processing unit 27 in displaying the vehicle position mark. In the following explanation, it is assumed that learned behavior information S acquired in the above-described manner for the vehicle C has been stored in the behavior database DB5, and the vehicle C is now on the trunk road K1. When the vehicle C passes through the intersection N1, pedestrian crossings are detected as particular features f2 and f3 by the image recognition unit 24. The behavior prediction unit 51 acquires learned behavior information S related to the particular feature f2 and f3 by reading the learned behavior information S from the behavior database DB5. On the basis of the acquired learned behavior information S, the behavior prediction unit 51 predicts that the vehicle C will probably make a left turn at the intersection N3. The behavior prediction unit 51 supplies the result of the prediction of the behavior to the navigation processing unit 27. If the vehicle C actually makes a left turn at the predicted position, the navigation processing unit 27 determines that the vehicle C has entered not the trunk road K2 but the narrow street K3 and displays the vehicle position mark Pc on the narrow street K3 on the display/input unit 29. In this case, the behavior prediction unit 51 may preferably supply the result of the prediction of the behavior to the vehicle position information acquisition unit 16 thereby to correct the vehicle position information P.

As described above, use of the vehicle behavior learning apparatus 2 according to the present embodiment of the invention makes it possible to increase the accuracy in displaying the vehicle position mark on the navigation apparatus 1 and/or providing route guidance.

### Example 2

In Example 1 described above, driver's operations accepted at various parts of the vehicle C and operations of the vehicle C which occur in response to operations performed by the driver are detected as behaviors of the vehicle C by the behavior detector 17. In Example 2 described below, an operation of the vehicle C which occurs in response to an external factor applied from the outside to the vehicle C is detected as a behavior of the vehicle C.

There is a system in which the damping force of a suspension of the vehicle C is controlled in accordance with road information supplied from the navigation apparatus 1 so as to improve steering stability at curves or so as to properly control damping force of vibrations at a step. The above control is realized in cooperation between the control of the suspension and the navigation apparatus 1, and thus this systems is called a navigation-assisted suspension system. In general, the navigation-assisted suspension system operates in accordance with vehicle position information P acquired by the navigation apparatus 1 from the GPS receiver 13, the direction sensor 14, and the distance sensor 15. However, the vehicle position information P has an error as described above, and the error can cause the suspension to be controlled at a wrong position.

Use of the vehicle behavior learning apparatus 2 according to the present invention makes it possible to detect the behavior of the vehicle C at a curve or a step by the vibration sensor 19, the direction sensor 14, the acceleration sensor 21, or the like and store the detected behavior as detected behavior information B in the detected behavior database DB4. If the vehicle C passes through the same point a plurality of times, a plurality of pieces of detected behavior information B are stored in the detected behavior database DB4, and learned behavior information S associated with the behavior is produced on the basis of the plurality of pieces of detected behavior information B stored in the detected behavior database DB4 and the produced learned behavior information S is stored in the behavior database DB5.

On the basis of the learned behavior information S produced and stored in the above-described manner, the behavior prediction unit 51 predicts the behavior of the vehicle C which will occurs at a step or a curve related to a corresponding feature. In formation indicating the result of the behavior prediction is supplied to a controller (vehicle controller 52) of the navigation-assisted suspension system, and the controller controls the suspension in accordance with the supplied information. Thus, when a road has a step at a particular point, it is predicted that a vibration or a shock will occur at this particular point, and the suspension is properly controlled in accordance with the prediction. Thus, it becomes possible to control the suspension more properly. The controller of the navigation-assisted suspension system is an implementation of the control apparatus adapted to optimize the operation of the vehicle according to the present invention.

In this Example 2, the detected behavior of the vehicle C is due to an external factor applied from the outside to the vehicle C. Therefore, the behavior does not greatly depend on a driver of the vehicle C, but greatly depends on roads. Therefore, for example, the detected behavior database DB4 and the behavior database DB5 may be preferably disposed in a server or the like capable of communicating with a plurality of vehicles so that the detected behavior information B and the learned behavior information S can be shared by a plurality of vehicles. This implementation makes it possible to more quickly learn the behavior of the vehicle which occurs at a particular point on a road.

### Example 3

In Example 3 described below, on the basis of the road information Ra stored in the map database DB1 and in response to an operation performed by a driver, the engine and/or the automatic transmission mechanism of the vehicle C are properly controlled. In this case, the control of the shift of the automatic transmission mechanism is performed in cooperation with the navigation apparatus 1, and thus this control system is called a navigation-assisted shift control. When the vehicle C goes uphill, the vehicle C runs at a low speed or runs at a high speed while performing kickdown, depending on preference of a driver. The behavior detector 17 detects the kickdown operation as detected behavior information B. If the same behavior is detected with respect to the same feature a plurality of times, the driving operation is learned as a tendency in the operation performed by the driver. That is, this behavior is described in learned behavior information S in association with the feature and is stored in the behavior database DB5.

On the basis of the stored learned behavior information S, the behavior prediction unit 51 predicts that the shift down will be necessary when the related feature is detected by the image recognition unit 24 via image recognition. On the basis of the prediction, the
navigation-assisted shit control system properly controls the shift operation taking into account other factors such as fuel consumption.
The control may be applied to an engine and various kinds of mechanisms of power train such as a transmission mechanism. In the case of a hybrid car having both an engine and an electric motor as driving power sources, each driving power source can be controlled so as to be maintained in an optimum operating state.

### Example 4

An operation of a sun visor performed by a driver may be detected as a behavior of the vehicle C due to acceptance of an operation performed by a driver. In this case, time information and/or date information may be acquired from the GPS receiver 13. That is, the operation of the sun visor, the time zone, the point, and the direction where the driver feels dazzled may be described in learned behavior information S stored. If the behavior prediction unit 51 predicts, on the basis of the learned behavior information S, that the driver will feel dazzled, various apparatus are controlled to properly handle the situation. For example, the brightness of the display screen of the display/input unit 29 and/or the electric sun visor is driven.

### Example 5

An operation of an air conditioner performed by a driver may be detected on the basis of a signal supplied from the air-conditioner switch 22, and may be regarded as a behavior of the vehicle C due to acceptance of operation performed by the driver. More specifically, for example, if a driver, who usually uses an air conditioner in a mode in which external air is inhaled, switches into a mode in which air is circulated internally, at a particular point, learned behavior information S associated with this behavior is produced and stored. Such a behavior can occur, for example, when the vehicle is running on a trunk road having a lot of traffic, if a driver operates the air-conditioner switch 22 to prevent exhaust gas from other vehicles from entering the vehicle C. If the behavior prediction unit 51 predicts on the basis of the learned behavior information S that the air conditioner will be operated, then, in accordance with the prediction, the controller of the air conditioner automatically switches the operation from the mode in which external air is inhaled to the mode in which air is circulated internally. If a delay occurs in switching the operation mode, exhaust gas will intrude into the vehicle C. Such intrusion of air will make the driver uncomfortable, even if the amount of intrusion is small. The automatic control of the air conditioner according to the prediction ensures comfortability in the vehicle.

### Modifications

Various other embodiments or modifications are possible as described below.

### Modification 1

In the embodiments described above, by way of example, the relation information Br is produced by the relation information generator 45 so as to include the distance information Bc produced by the distance information generator 46 and the feature identification information Bb produced by the feature identification information generator 47. However, the content of the relation information Br is not limited to that shown in the embodiments. For example, the relation information Br may include only one of the distance information Bc or the feature identification information Bb, or the relation information Br may include additional information such as information indicating a relationship between a behavior of the vehicle and a particular feature detected by the image recognition unit before the detection of the behavior.

### Modification 2

In the embodiments described above, for example, as in the embodiment described with reference to Fig. 7B, a plurality of pieces of detected behavior information B associated with the same behavior may be combined in a single set of information including common behavior property information Ba and feature identification information Bb and stored in the detected behavior database DB4. However, the format of the detected behavior information B stored in the detected behavior database DB4 is not limited to that disclosed in the above embodiments. In the present invention, a plurality of pieces of detected behavior information B associated with the same behavior may be separately stored in the detected behavior database DB4.

### Modification 3

In the embodiments described above, statistical relation information Sr is statistically determined from a plurality of pieces of relation information Br associated with the same behavior indicated in a plurality of pieces of detected behavior information B such that mean distance information Sc indicating the mean value of a plurality of pieces of distance information Bc associated with the same behavior is determined by the mean distance determination unit 49. However, the content of the statistical relation information Sr is not limited to that disclosed in the above embodiments. For example, on the basis of a distribution of a plurality of pieces of distance information Bc associated with the same behavior, the mode or the median of the distribution, or other representatives may be employed as the statistical distance information, statistical relation information Sr may be produces so as to include this statistical distance information and feature identification information Bb.

### Modification 4

In the embodiments described above, the vehicle behavior learning apparatus 2 is configured so as to include the behavior prediction unit 51, and the prediction result in terms of the behavior of the vehicle C is supplied to the vehicle controller 52 or the like. However, in the present invention, the configuration of the vehicle behavior learning apparatus 2 is not limited to that disclosed in the above embodiments. For example, the vehicle behavior learning apparatus 2 may not include the behavior prediction unit 51. More specifically, for example, the vehicle behavior learning apparatus 2 may be configured so as to include a vehicle position information correction unit to correct the vehicle position information P acquired by the vehicle position information acquisition unit 16 on the basis of a behavior of the vehicle C in terms of changing a running direction such as a right turn or a left turn and on the basis of a road shape described in the map information M so that the change in the running direction is correctly expressed on the map. In this case, the vehicle behavior learning apparatus 2 according to the invention functions as a part of the vehicle position recognition apparatus.

### Modification 5

In the embodiments described above, the recognition position information acquired by the recognition position information acquisition unit 41 indicates a position at which the vehicle C is found when a feature is successfully detected via image recognition. However, the manner in which the position information indicated by the recognition position information is determined is not limited to that disclosed in the above embodiments. For example, when a particular feature is successfully detected via image recognition, the position of the detected particular feature on a road relative to the vehicle position information P may be calculated on the basis of the vehicle position information P and the result of image recognition of the image information G, and the position of the particular feature on the road may be acquired as recognition position information by the recognition position information acquisition unit 41.

### Modification 6

In the embodiments described above, the estimated position acquisition unit 43 determines the estimated recognized position pa of a particular feature by determining the mode of a distribution of a plurality of pieces of recognized feature information A associated with the same particular feature, and the estimated position acquisition unit 43 then converts the estimated recognized position pa into a position on a road thereby obtaining an estimated position pg of the particular feature. However, the method of determining the estimated position pg by the estimated position acquisition unit 43 is not limited to that disclosed in the above embodiments. For example, another representative value of the distribution of the recognized feature information A, such as the mean value or the median, may be preferably employed as the estimated recognized position pa of the particular feature.

### Modification 7

In the embodiments described above, by way of example, various road markings on road surface are detected as particular features. However, in the present invention, particular features are not limited to such road markings, but other various features disposed on sides of roads or disposed at other locations may be detected as particular features. Some specific examples of such features are road signs, guide signs, advertising displays, traffic signals, and manholes.

### Modification 8

In the embodiments described above, databases DB1 to DB5 are disclosed only by way of example, and configurations of the databases DB1 to DB5 shown in the embodiments do not define hardware configurations. For example, the feature database DB2 and the recognized feature database DB3 may be combined into a single database, and the detected behavior database DB4 and the behavior database DB5 may be combined into a single database. Alternatively, for example, the map database DB1 and the feature database DB2 may be combined into a single database. There can be many other alternatives.

### Modification 9

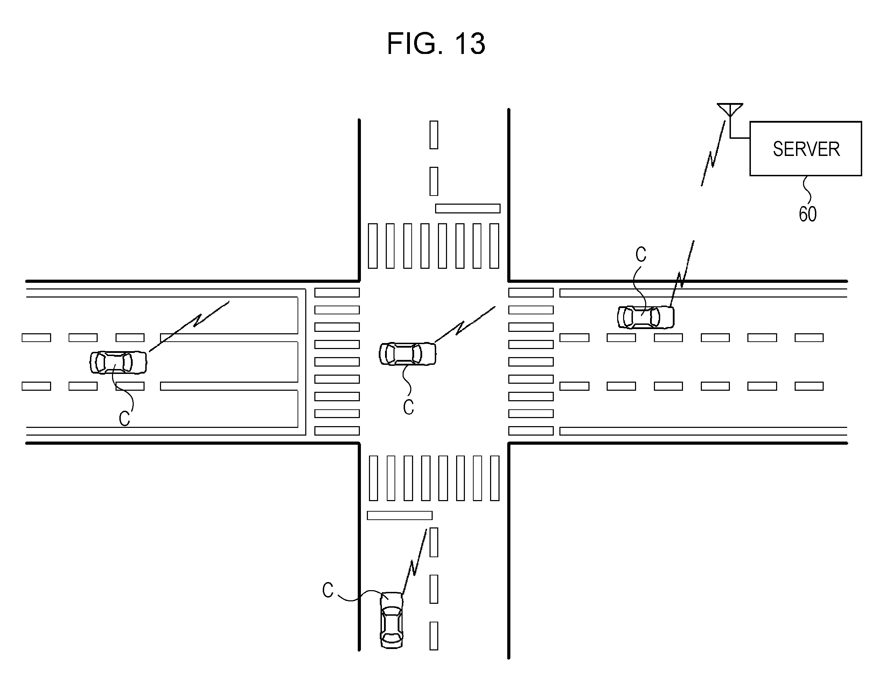

In the embodiments described above, all parts of the navigation apparatus 1, including the vehicle behavior learning apparatus 2 according to the present invention, are installed in the vehicle C. However, the present invention is not limited to such an implementation. For example, some parts of the vehicle behavior learning apparatus 2, including one or both of the recognized feature database DB3 serving as the recognized feature storage unit according to the present invention and the detected behavior database DB4 serving as the detected behavior storage unit, may be installed in a server 60 adapted to be capable of communicating with a plurality of vehicles C via a radio communication channel or the like, as shown in Fig. 13. By configuring the vehicle behavior learning apparatus 2 in such a manner, it becomes possible to accumulate learning results in terms of behaviors of a plurality of vehicles C and learning results in terms of particular feature in the detected behavior database DB4 or the recognized feature database DB3 installed in the server 60. Thus, it becomes possible to quickly produce learned behavior information S or learned feature information Fb using a greater number of pieces of detected behavior information B or recognized feature information A. The parts of the vehicle behavior learning apparatus 2 installed in the server 60 are not limited to the recognized feature database DB3 and the detected behavior database DB4, but any part other than parts necessary to be installed in the vehicle C such as the image pickup apparatus 11 and the vehicle position information acquisition unit 16 may be installed in the server 60. For example, any one or more of the map database DB1, the feature database DB2, and the behavior database DB5 may be installed in the server 60.

### Modification 10

In the embodiments described above, the vehicle behavior learning apparatus 2 according to the present invention is used in the navigation apparatus 1. However, the present invention is not limited to such an implementation. For example, the vehicle behavior learning apparatus 2 according to the present invention may be used in an apparatus other than the navigation apparatus 1, such as a running controller of a vehicle.

[0136] As described above, in a vehicle behavior learning apparatus adapted to learn a behavior of a vehicle which occurs at a particular point, relation information is acquired which indicates the relationship between a behavior of vehicle detected by a behavior detection unit and a particular feature recognized by an image recognition unit 24 before the detection of the behavior. Detected behavior information is then produced so as to include behavior property information indicating a property of the behavior of the vehicle detected by the behavior detection unit 24 and the acquired relation information associated with the behavior, and the resultant detected behavior information is stored in a detected behavior storage unit DB4. Learned behavior information representing a result of learning on the behavior of the vehicle related to the particular feature is produced on the basis of the detected behavior information stored in the detected behavior storage unit DB4.

## Claims

1. A vehicle behavior learning apparatus comprising
an image information acquisition unit (**12**) adapted to acquire image information of a nearby area around a vehicle;
an image recognition unit (**24**) adapted to perform image recognition of a particular feature included in the image information;
a behavior detection unit (**17**) adapted to detect a behavior of the vehicle;
a relation information acquisition unit (**45**) adapted to acquire relation information indicating the relationship between the behavior of the vehicle detected by the behavior detection unit (**17**) and the particular feature recognized by the image recognition unit (**24**) before the recognition of the behavior;
a detected behavior storage unit (**DB4**) adapted to store detected behavior information including behavior property information indicating a property of the behavior of the vehicle detected by the behavior detection unit (**17**) and the relation information associated with the behavior acquired by the relation information acquisition unit (**45**); and
a learned behavior information generation unit (**50**) adapted to produce learned behavior information indicating a result of learning on the behavior, related to the particular feature, of the vehicle, on the basis of the detected behavior information stored in the detected behavior storage unit (**DB4**).

2. The vehicle behavior learning apparatus according to claim 1, wherein the behavior of the vehicle detected by the behavior detection unit (**17**) includes at least one of an operation of the vehicle and acceptance, at a part of the vehicle, of an operation performed by a driver.

3. The vehicle behavior learning apparatus according to claim 1 or 2, the relation information includes distance information indicating the distance from a recognized location of the particular feature recognized by the image recognition unit (**24**) to a position of the vehicle at which the behavior of the vehicle is detected by the behavior detection unit (**17**).

4. The vehicle behavior learning apparatus according to one of claims 1 to 3, wherein the relation information includes feature identification information identifying the particular feature recognized by the image recognition unit (**24**).

5. The vehicle behavior learning apparatus according to one of claims 1 to 4, wherein the relation information acquisition unit (**45**) is adapted to acquire the relation information on the basis of at least one of information supplied from a travel distance detection unit (**15**) adapted to detect a travel distance of the vehicle and information supplied from a vehicle position information acquisition unit (**16**) adapted to acquire vehicle position information indicating the current position of the vehicle.

6. The vehicle behavior learning apparatus according to one of claims 1 to 5, wherein the learned behavior information includes the behavior property information associated with a particular behavior and statistical relation information, the behavior property information being produced on the basis of a plurality of pieces of detected behavior information associated with the same particular behavior detected a plurality of times and stored in the detected behavior storage unit (**DB4**), the statistical relation information being determined statistically from the plurality of pieces of relation information associated with the particular behavior.

7. The vehicle behavior learning apparatus according to one of claims 1 to 6, wherein the particular feature is a road marking formed on the surface of a road.

8. The vehicle behavior learning apparatus according to one of claims 1 to 7, further comprising a learned behavior information storage unit (**DB5**) adapted to store the learned behavior information produced by the learned behavior information generation unit (**50**).

9. The vehicle behavior learning apparatus according to one of claims 1 to 8, further comprising a behavior prediction unit (**51**) adapted to predict a behavior of the vehicle such that when a particular feature indicated by the learned behavior information is detected via image recognition, the behavior prediction unit is adapted to predict, on the basis of the learned behavior information, that a behavior of the vehicle related to the detected particular feature will occur, and the behavior prediction unit is adapted to output a result of the prediction of the behavior.

10. The vehicle behavior learning apparatus according to one of claims 1 to 9, further comprising:
a recognition position information acquisition unit (**41**) adapted to acquire recognition position information indicating a recognition position of a particular feature recognized by the image recognition unit (**24**);
a recognized feature storage unit (**DB3**) adapted to store recognized feature information including feature property information representing a property of the particular feature recognized by the image recognition unit (**24**) and the recognition position information acquired by the recognition position information acquisition unit (**41**); and
a learned feature information generation unit (**44**) adapted to produce learned feature information representing a result of learning of the particular feature on the basis of a plurality of pieces of recognized feature information produced for the same particular feature detected a plurality of times via image recognition and stored in the recognized feature storage unit (**DB3**)**.**

11. The vehicle behavior learning apparatus according to one of claims 1 to 10, wherein the detected behavior storage unit (**DB4**) is connected to a plurality of vehicles such that the detected behavior storage unit is capable of communicating with the plurality of vehicles, and the detected behavior storage unit is adapted to store detected behavior information supplied from one or more of the plurality of vehicles.

12. The vehicle behavior learning apparatus according to claim 9, wherein the behavior prediction unit (**51**) is configured to supply the result of the prediction of the behavior to a navigation processing unit (**27**) adapted to perform a calculation and/or a process for outputting guidance information associated with the vehicle.

13. The vehicle behavior learning apparatus according to claim 9, wherein the behavior prediction unit (**51**) supplies the result of the prediction of the behavior to a control apparatus disposed in a vehicle, the control apparatus being adapted to reproduce the operation performed by the driver.

14. The vehicle behavior learning apparatus according to claim 9, wherein the behavior prediction unit (**51**) is adapted to supply the result of the prediction of the behavior to a control apparatus adapted to optimize the operation of the vehicle.

15. The vehicle behavior learning apparatus according to claim 10, wherein the learned feature information includes the feature property information associated with the same particular feature indicated by the plurality of pieces of recognized feature information and estimated position information statistically determined from the plurality of pieces of recognition position information associated with the particular feature.

16. The vehicle behavior learning apparatus according to claim 10 or 15, further comprising a learned feature information storage unit (**DB2**) adapted to store the learned feature information produced by the learned feature information generation unit (**44**).

17. The vehicle behavior learning apparatus according to one of claims 10, 15, and 16, wherein the recognized feature storage unit (**DB3**) is connected to a plurality of vehicles such that the recognized feature storage unit is capable of communicating with the plurality of vehicles, and the recognized feature storage unit is adapted to store recognized feature information supplied from one or more of the plurality of vehicles.

18. A navigation apparatus comprising:
a vehicle behavior learning apparatus according to one of claims 1 to 17;
a map information storage unit (**DB1**) in which map information is stored;
an application program adapted to operate with reference to one or both of the learned behavior information and the map information; and
a guidance information output unit (**29, 30, 31**) adapted to operate according to the application program so as to output guidance information.

19. A vehicle behavior learning method comprising the steps of:
acquiring image information of a nearby area around a vehicle (**#02**);
performing image recognition of a particular feature included in the image information (**#03**);
detecting a behavior of the vehicle (**#07**);
acquiring relation information indicating the relationship between the behavior of the vehicle detected in the behavior detection step and the particular feature recognized in the image recognition step before the recognition of the behavior (**#10**);
storing detected behavior information in a detected behavior storage unit, the detected behavior information including behavior property information indicating a property of the behavior of the vehicle detected in the behavior detection step and the relation information associated with the behavior acquired in the relation information acquisition step (**#12**); and
producing learned behavior information indicating a result of learning on the behavior, related to the particular feature, of the vehicle, on the basis of the detected behavior information stored in the detected behavior storage unit (**#14**).

20. A computer program product for a computer, comprising software code portions for performing the steps of claim 19 when the program is run on the computer.
